# EUROPÄISCHE PATENTSCHRIFT

(11) **EP 4 010 399 B1**
(45) Veröffentlichungstag und Bekanntmachung des Hinweises auf die Patenterteilung: **30.08.2023**
(21) Anmeldenummer: 20750218.8
(22) Anmeldetag: 29.07.2020
(51) Int. Cl.: C08G 59/40, C08K 5/55

(54) **LAGERSTABILE EPOXIDHARZ-ZUSAMMENSETZUNG**
STORAGE-STABLE EPOXY RESIN COMPOSITION
COMPOSITION DE RÉSINE ÉPOXY STABLE AU STOCKAGE

(30) Priorität: 06.08.2019 DE 102019121195
(43) Veröffentlichungstag der Anmeldung: 15.06.2022
(73) Patentinhaber: Alzchem Trostberg GmbH, 83308 Trostberg (DE)
(72) Erfinder: ZGELA, Dominik, 83376 Truchtlaching (DE); DIJKINK, Peter, 84518 Garching (DE); RITZINGER, Florian, 84518 Garching (DE); HARTL, Maximilian, 83250 Marquartstein (DE); SAX, Monika, 84549 Engelsberg (DE)
(74) Vertreter: Dey, Michael
(86) Internationale Anmeldenummer: PCT/EP2020/071371
(87) Internationale Veröffentlichungsnummer: WO 2021/023593

(56) Entgegenhaltungen:
- EP-A1- 3 257 884

## Beschreibung

Die vorliegende Erfindung betrifft die Verwendung von Boronsäuren zur Erhöhung der Lagerstabilität von Epoxidharz-Zusammensetzungen sowie Epoxidharz-Zusammensetzungen umfassend ein Epoxidharz, einen Härter, einen Härtungsbeschleuniger sowie eine Boronsäure.

Die Verwendung von Epoxidharzen ist aufgrund ihrer guten Chemikalienbeständigkeit, ihrer sehr guten thermischen und dynamischmechanischen Eigenschaften sowie ihres hohen elektrischen Isolationsvermögens weit verbreitet. Diese Epoxidharze liegen in flüssiger oder fester Form vor und können unter Zusatz von Härtern mit und ohne unter Wärmeeintrag gehärtet werden.

Die Härtung von Epoxidharzen verläuft nach unterschiedlichen Mechanismen. Neben der Härtung mit Phenolen oder Anhydriden wird häufig die Härtung mit Aminen durchgeführt. Diese Stoffe sind meist flüssig und lassen sich sehr gut mit Epoxidharzen vermengen. Aufgrund der hohen Reaktivität werden derartige Epoxidharz-Zusammensetzungen zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. Diese zweikomponentigen Harzformulierungen werden auch als sogenannte kalthärtende Harzformulierungen bezeichnet, wobei die dafür verwendeten Härter meist aus der Gruppe der Amine oder Amidoamine gewählt werden.

Einkomponentige, heißhärtende Epoxidharzformulierungen sind hingegen gebrauchsfähig fertig vorkonfektioniert, das heißt, dass Epoxidharz und Härter werkseitig vermischt vorliegen. Mischungsfehler der Einzelkomponenten bei Gebrauch vor Ort sind daher ausgeschlossen. Voraussetzung dafür bilden latente Härtersysteme, welche bei Raumtemperatur mit dem Epoxidharz nicht reagieren, jedoch unter Erwärmung je nach Energieeintrag bereitwillig ausreagieren. Hierbei bedeutet "latent", dass eine Mischung der Einzelkomponenten unter definierten Lagerbedingungen stabil vorliegt.

Für solche einkomponentige Epoxidharz-Formulierungen ist beispielsweise Dicyandiamid ein besonders geeigneter und auch kostengünstiger Härter. Unter Umgebungsbedingungen können entsprechende Epoxidharz-Dicyandiamid-Mischungen bis zu zwölf (12) Monate gebrauchsfähig gelagert werden.

Um die Reaktionstemperatur für die Härtung von einkomponentigen Epoxidharz-Formulierungen, wie beispielsweise Epoxidharz-Dicyandiamid-Mischungen, herabzusetzen, wird diesen Formulierungen üblicherweise ein Härtungsbeschleuniger zugesetzt, der die Aktivierungsenergie für die Härtung herabsetzt, so dass eine Härtung bei niedrigeren Temperaturen möglich ist. Durch diese Härtungsbeschleuniger wird in vielen Fällen jedoch die Lagerstabilität von Epoxidharz-Zusammensetzung, die ein Epoxidharz, einen Härter und einen Härtungsbeschleuniger umfassen, herabgesetzt, so dass eine Lagerung bei Raumtemperatur über einen größeren Zeitraum nicht möglich ist. Um dennoch eine ausreichende Lagerstabilität von diesen einkomponentigen Epoxidharz-Formulierungen zu gewährleisten, müssen diese bei kontrollierten, niedrigen Temperaturen, oft bei -18 °C, gelagert werden. Das führt zu erheblichen Zusatzkosten und großem Aufwand bei Lagerung, Transport und bei der Verarbeitung dieser Formulierung, insbesondere bei der Herstellung von Prepregs, Towpregs oder Klebstoffen.

In Kenntnis derartiger Hindernisse wurden bereits Vorschläge zu deren Überwindung veröffentlicht. So werden mit der europäischen Patentschrift EP 659793 B1 Gemische von Borsäure oder Boraten (Borsäureester) und Imidazol-Epoxidharz-Addukte als Härter für Epoxidharze beschrieben. Die somit erhaltenen Zusammensetzungen sind lagerstabil und ermöglichen eine schnelle Härtung durch Erhitzen.

Weiterhin werden mit der europäischen Patentschrift EP 2678369 B1 flüssige Härter beschrieben, die Cyanamid, mindestens ein Harnstoffderivat (Uron) und mindestens eine organische oder anorganische Säure als Stabilisator enthalten. Diese Härter lösen sich hervorragend in Epoxidharzen, weisen in den Epoxidharzen eine hohe Latenz auf und ermöglichen eine lange Lagerstabilität.

Weiterhin wird mit der europäischen Patentanmeldung EP 3257884 A1 ein Epoxidharz-Gemisch aus Epoxidharz, Dicyandiamid, aromatischer Uron, und Borsäure-Ester beschrieben. Die in den Beispielen aufgeführte Wirksamkeit der Borsäure-Ester, speziell die Verlängerung der Zeit bis Peak in die Wärmestromkurve bei 60 °C, ist dermaßen gering, dass zu bezweifeln ist, ob durch Zugabe dieser Ester auf die Tiefkühl-Lagerung und den Tiefkühl-Transport verzichtet werden kann.

Der vorliegenden Erfindung liegt daher die Aufgabe zugrunde, eine Epoxidharz-Zusammensetzung umfassend einen Härter und einen Härtungsbeschleuniger bereitzustellen, die über einen größeren Zeitraum von mehreren Tagen gelagert werden kann, ohne dass eine Härtung zu beobachten ist. Diese Epoxidharz-Zusammensetzung soll eine hohe Latenz und somit eine hohe Lagerstabilität unterhalb der Härtungstemperatur sowie eine hohe Reaktivität bei der Härtungstemperatur aufweisen.

Gelöst werden konnten diese Aufgaben durch eine Verwendung gemäß Anspruch 1 sowie eine Epoxidharz-Zusammensetzung gemäß Anspruch 7. Bevorzugte Ausführungsformen der Erfindung sind in den Unteransprüchen angegeben, die wahlweise miteinander kombiniert werden können.

Damit ist gemäß einer ersten Ausführung die Verwendung von Boronsäuren der allgemeinen Formel (I) zur Erhöhung der Lagerstabilität von Epoxidharz-Zusammensetzungen, insbesondere flüssigen Epoxidharz-Zusammensetzungen, umfassend ein Epoxidharz, insbesondere ein flüssiges Epoxidharz, einen Härter und einen Härtungsbeschleuniger Gegenstand der vorliegenden Erfindung, wobei für Formel (I) gilt 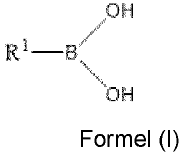 wobei für den Rest R¹ gilt:
R¹ = Alkyl, Hydroxyalkyl oder ein Rest der Formel (II), wobei für Formel (II) gilt 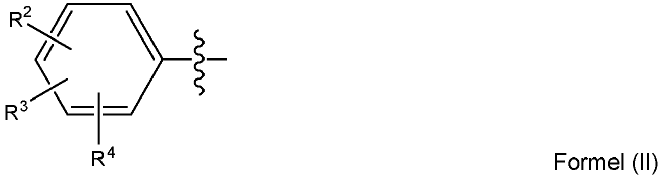
wobei für R², R³, R⁴ unabhängig voneinander gilt und mindestens einen Rest R², R³, R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl, oder B(OH)₂,
wobei die Epoxidharz-Zusammensetzung als Härtungsbeschleuniger einen Härtungsbeschleuniger gemäß Formel (IV) umfasst, wobei für Formel (IV) gilt: 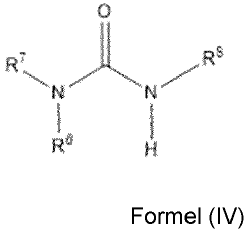 wobei für R⁶, R⁷, R⁸ unabhängig voneinander gilt:
   R⁶, R⁷ = unabhängig voneinander Wasserstoff oder C₁- bis C₅-Alkyl,
   R⁸ = Wasserstoff, C₁- bis C₁₅-Alkyl, C₃- bis C₁₅-Cycloalkyl, Aryl, Alkylaryl,
      mit -NHC(O)NR⁶R⁷substituiertes C₁- bis C₁₅-Alkyl,
      mit -NHC(O)NR⁶R⁷substituiertes C₃- bis C₁₅-Cycloalkyl,
      mit -NHC(O)NR⁶R⁷ substituiertes Aryl oder
      mit -NHC(O)NR⁶R⁷ substituiertes Alkylaryl.

Gemäß der vorliegenden Erfindung bedeutet Epoxidharz-Zusammensetzung eine Zusammensetzung deren Epoxidharze wärmehärtbar sind, d.h. auf Grund ihrer funktionellen Gruppen, nämlich Epoxidgruppen, durch Wärme polymerisierbar, vernetzbar und/oder quervernetzbar sind. Hierbei erfolgt eine Polymerisation, Vernetzung und/oder Quervernetzung als Folge einer Polyaddition, die durch den Härter und den Härtungsbeschleuniger induziert wird.

Im Zusammenhang mit der vorliegenden Erfindung soll dabei unter Alkyl ein gesättigter, linearer oder verzweigter, aliphatischer Rest verstanden sein, insbesondere ein Alkylrest, der die allgemeine Formel CₙH₂ₙ₊₁ aufweist, wobei n die Anzahl der Kohlenstoffatome des Restes wiedergibt. Alkyl kann einen Rest mit einer größeren Anzahl an Kohlenstoffatomen bedeuteten. Bevorzugt bedeutet Alkyl einen gesättigten, linearen oder verzweigten, aliphatischen Rest, der die allgemeine Formel CₙH₂ₙ₊₁ aufweist, wobei n die Anzahl der Kohlenstoffatome des Restes wiedergibt und n eine Zahl von 1 bis 15 wiedergibt. Somit bedeutet Alkyl bevorzugt C₁- bis C₁₅-Alkyl, noch mehr bevorzugt C₁- bis Cw-Alkyl. Dabei ist weiter bevorzugt vorgesehen, dass C₁- bis C₁₅-Alkyl insbesondere Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, n-Heptyl, n-Octyl, n-Nonyl, n-Decyl, n-Undecyl oder n-Dodecyl bedeutet.

Weiterhin bedeutet C₁- bis C₅-Alkyl einen gesättigten, linearen oder verzweigten Alkylrest mit bis zu fünf Kohlenstoffatomen. Bevorzugt ist vorgesehen, dass C₁- bis C₅-Alkyl insbesondere Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl oder 1-Ethylpropyl bedeutet.

Gemäß der vorliegenden Erfindung bedeutet Hydroxyalkyl einen Alkylrest der oben genannten Bedeutung, der mit einer, zwei oder drei Hydroxygruppen substituiert ist. Gemäß der vorliegenden Erfindung bedeutet Hydroxyalkyl insbesondere einen Alkylrest, der bis zu 15 Kohlenstoffatome aufweist und der mit einer Hydroxygruppe substituiert ist. Somit bedeutet Hydroxyalkyl bevorzugt C₁- bis C₁₅-Hydroxyalkyl. Weiterhin bevorzugt steht Hydroxyalkyl für C₁- bis C₅-Hydroxyalkyl. Ganz besonders bevorzugt bedeutet Hydroxyalkyl Hydroxymethyl, 2-Hydroxyethyl, 3-Hydroxypropyl, 4-Hydroxybutyl oder 5-Hydroxypentyl.

Im Zusammenhang mit der vorliegenden Erfindung soll weiterhin unter C₃- bis C₁₅-Cycloalkyl ein gesättigter, monocyclischer oder bicyclischer aliphatischer Rest mit 3 bis 15 Kohlenstoffatomen verstanden sein, insbesondere ein Cycloalkylrest, der die allgemeine Formel CₙH₂ₙ₋₁, mit n = eine ganze Zahl von 3 bis 15, aufweist. Dabei ist bevorzugt vorgesehen, dass C₃- bis C₁₅-Cycloalkyl insbesondere Cyclopropyl, Cyclobutyl, Cyclopentyl, Cyclohexyl oder Cycloheptyl bedeutet, wobei diese Cycloalkylreste ihrerseits weiterhin bevorzugt einfach oder mehrfach mit Alkyl der oben beschriebenen Bedeutung substituiert sein können.

Gemäß der vorliegenden Erfindung bedeutet C₃- bis C₁₅-Cycloalkyl besonders bevorzugt Cyclopentyl, Cyclohexyl, die ihrerseits einfach oder mehrfach mit Alkyl substituiert sein können, insbesondere 3,3,5,5-Tetramethyl-1-Cyclohexyl.

Cyano bezeichnet eine Nitrilgruppe der allgemeinen Formel CN.

Nitro bezeichnet eine funktionelle Gruppe der allgemeinen Formel NO₂.

Amino bezeichnet eine funktionelle Gruppe der allgemeinen Formel NH₂.

Imino bezeichnet eine funktionelle Gruppe der allgemeinen Formel NH.

Gemäß der vorliegenden Erfindung bedeutet Alkylamino einen Rest der Formel NHₙ (Alkyl)₂₋ₙ, mit n = 0 oder 1, wobei Alkyl ein Alkyl-Rest der oben angegebe Bedeutung ist und wobei die Bindungsstelle an dem Stickstoff lokalisiert ist.

Carboxyl bezeichnet eine funktionelle Gruppe der allgemeinen Formel COOH.

Gemäß der vorliegenden Erfindung bedeutet Alkoxy einen Rest der Formel O-Alkyl, wobei Alkyl ein Alkyl-Rest der oben angegebenen Bedeutung ist und wobei die Bindungsstelle an dem Sauerstoff lokalisiert ist. Gemäß der vorliegenden Erfindung bedeutet Alkoxy, insbesondere einen Alkoxyrest, dessen Alkylrest bis zu 15 Kohlenstoffatome, insbesondere bis zu 5 Kohlenstoffatome aufweist. Somit bedeutet Alkoxy bevorzugt C₁- bis C₁₅-Alkoxy und mehr bevorzugt C₁- bis Cs-Alkoxy. Besonders bevorzugt bedeutet Alkoxy Methoxy, Ethoxy, n-Propoxy, n-Butoxy oder n-Pentoxy.

Gemäß der vorliegenden Erfindung bedeutet Acyl einen Rest der Formel C(O)-R⁵, wobei R⁵ an den Kohlenstoff gebunden ist und Wasserstoff, Alkyl oder Alkoxy der oben angegeben Bedeutung sein kann und wobei die Bindungsstelle des Acylrestes an dem Kohlenstoff lokalisiert ist. Besonders bevorzugt bedeutet Acyl Formyl oder Acetyl.

Weiterhin bedeutet Alkylsulfonyl einen Rest der Formel SO₂-Alkyl, wobei sowohl die Bindungsstelle des Alkylsulfonylrestes als auch des Alkylrest an dem Schwefel lokalisiert ist und wobei Alkyl ein Alkyl-Rest der oben angegebenen Bedeutung ist. Gemäß der vorliegenden Erfindung bedeutet Alkylsulfonyl insbesondere einen Alkylsulfonylrest, dessen Alkylrest bis zu 15 Kohlenstoffatome aufweist. Somit bedeutet Alkylsulfonyl bevorzugt C₁- bis C₁₅-Alkylsulfonyl und mehr bevorzugt C₁-bis Cs-Alkylsulfonyl. Besonders bevorzugt bedeutet Alkylsulfonyl Methylsulfonyl, Ethylsulfonyl, n-Propylsulfonyl, n-Butylsulfonyl oder n-Pentylsulfonyl.

Gemäß der vorliegenden Erfindung bedeutet Aryl einen aromatischen Rest, insbesondere einen aromatischen Rest mit 6 bis 15 Kohlenstoffatomen, der monocyclisch, bicyclisch oder polycyclisch sein kann. Somit bedeutet Aryl bevorzugt C₆- bis C₁₅-Aryl. Besonders bevorzugt bedeutet Aryl Phenyl, Naphthyl, Anthryl, Phenantryl, Pyrenyl oder Perylenyl, ganz besonders bevorzugt Phenyl.

Weiterhin bedeutet gemäß der vorliegenden Erfindung Alkylaryl einen aromatischen Rest, der oben beschriebenen Art, der seinerseits einfach oder mehrfach mit Alkyl der oben beschriebenen Art substituiert ist. Insbesondere bedeutet Alkylaryl einen aromatischen Rest, der 6 bis 15 Kohlenstoffatome aufweist. Somit bedeutet Alkylaryl bevorzugt C₆- bis C₁₅-Alkylaryl. Weiterhin bevorzugt bedeutet Alkylaryl Methylphenyl, Dimethylphenyl oder Trimethylphenyl.

Überraschenderweise hat sich gezeigt, dass eine Zugabe von erfindungsgemäßen Boronsäuren gemäß Formel (I) zu Epoxidharz-Zusammensetzungen, die ein Epoxidharz, einen Härter und einen Härtungsbeschleuniger enthalten, die Lagerstabilität der somit zur Härtung bereits vorbereiteten Epoxidharz-Zusammensetzung deutlich verbessert, so dass entsprechende Epoxidharz-Zusammensetzungen bei Raumtemperatur bis 40 °C über mindestens eine Woche und bis zu über vier Wochen gelagert werden können. Vollkommen überraschend hat sich gezeigt, dass die angestrebte Lagerstabilität erreicht wird, ohne dass sich die Reaktivität der Zusammensetzung wesentlich ändert. Durch den Zusatz von Boronsäuren wird die zu erreichende Glasübergangstemperatur nicht beeinträchtigt. So werden die Härtungseigenschaften der Härter und Härtungsbeschleuniger insgesamt, die erreicht werden ohne den Zusatz der Boronsäuren, nicht geändert und im Wesentlichen beibehalten. Diese Tatsachen sind in Gänze überraschend. Insgesamt kann somit eine Epoxidharz-Zusammensetzung zur Verfügung gestellt werden, die eine hohe Lagerstabilität bei Raumtemperatur und eine hohe Reaktivität bei der Härtungstemperatur aufweist und die hervorragend für den Einsatz in Prepregs, Towpregs und 1-Komponenten-Klebstoffe geeignet ist.

Erfindungsgemäß können Boronsäuren der Formel (I) eingesetzt werden, wobei R¹ in Formel (I) Alkyl, Hydroxyalkyl oder einen Rest der Formel (II) bedeuten kann. Bevorzugt kann R¹ in Formel (I) Alkyl oder Hydroxyalkyl bedeuten, wobei weiter bevorzugt vorgesehen sein kann, dass R¹ die folgende Bedeutung aufweist:
R¹ = Methyl, Ethyl, n-Propyl, 1-Methylethyl, n-Butyl, 1-Methylpropyl, 2-Metylpropyl, n-Pentyl, n-Hexyl, n-Heptyl, n-Octyl, n-Nonyl, n-Decanyl, Hydroxymethyl, 2-Hydroxyethyl, 3-Hydroxypropyl, 4-Hydroxybutyl oder 5-Hydroxypentyl.

Gemäß der vorliegenden Erfindung kann R¹ auch einen Rest der Formel (II) bedeuten, wobei mindestens ein Substituent R², R³, R⁴ ungleich Wasserstoff bedeutet. Somit kann alternativ bevorzugt R¹ in Formel (I) einen Rest der Formel (II) bedeuten, wobei für die Reste R², R³, R⁴ in Formel (II) gilt:
R² = Fluor, Chlor, Brom, lod, Cyano, C₁- bis C₅-Alkyl, Alkoxy, Acyl, Alkylsulfonyl, Aryl, Carboxyl oder B(OH)₂,
R³, R⁴ = Wasserstoff.

Weiter bevorzugt kann R¹ in Formel (I) einen Rest der Formel (II) bedeuten, wobei für die Reste R², R³, R⁴ in Formel (II) gilt:
R² = Fluor, Cyano, Acyl, Alkylsulfonyl oder B(OH)₂,
R³, R⁴ = Wasserstoff.

Noch weiter bevorzugt kann R¹ in Formel (I) einen Rest der Formel (II) bedeuten, wobei für die Reste R², R³, R⁴ in Formel (II) gilt:
R² = Fluor, Cyano, Formyl, Acetyl, Methylsulfonyl, Ethylsulfonyl, n-Propylsulfonyl,
   n-Butylsulfonyl, n-Pentylsulfonyl oder B(OH)₂,
R³, R⁴ = Wasserstoff.

Gemäß einer weiteren Alternative kann R¹ in Formel (I) bevorzugt auch einen Rest der Formel (II) bedeuten, wobei für die Reste R², R³, R⁴ in Formel (II) gilt:
R², R³ = unabhängig voneinander Fluor, Chlor, Brom, lod, Cyano, C₁- bis C₅-Alkyl, Alkoxy, Acyl, Alkylsulfonyl, Aryl, Carboxyl oder B(OH)₂,
R⁴ = Wasserstoff.

Weiter bevorzugt kann R¹ in Formel (I) einen Rest der Formel (II) bedeuten, wobei für die Reste R², R³, R⁴ in Formel (II) gilt:
R², R³ = unabhängig voneinander Fluor oder Alkoxy,
R⁴ = Wasserstoff.

Noch weiter bevorzugt kann R¹ in Formel (I) einen Rest der Formel (II) bedeuten, wobei für die Reste R², R³, R⁴ in Formel (II) gilt:
R², R³ = unabhängig voneinander Fluor, Methoxy, Ethoxy, n-Propoxy, n-Butoxy oder n-Pentoxy,
R⁴ = Wasserstoff.

Gemäß einer weiteren Alternative kann R¹ in Formel (I) bevorzugt auch einen Rest der Formel (II) bedeuten, wobei für die Reste R², R³, R⁴ in Formel (II) unabhängig voneinander gilt:
R², R³, R⁴ = Fluor, Chlor, Brom, lod, Cyano, C₁- bis C₅-Alkyl, Alkoxy, Acyl, Alkylsulfonyl, Aryl, Carboxyl oder B(OH)₂.

Weiter bevorzugt kann R¹ in Formel (I) einen Rest der Formel (II) bedeuten, wobei für die Reste R², R³, R⁴ in Formel (II) unabhängig voneinander gilt:
R², R³, R⁴ = Fluor oder C₁- bis C₅-Alkyl.

Noch weiter bevorzugt kann R¹ in Formel (I) einen Rest der Formel (II) bedeuten, wobei für die Reste R², R³, R⁴ in Formel (II) unabhängig voneinander gilt:
R², R³, R⁴ = Fluor, Methyl, Ethyl, n-Propyl, 1-Methylethyl, n-Butyl, 1-Methylpropyl, 2-Methylpropyl, 1,1-Dimethylethyl, n-Pentyl.

Ganz besonders bevorzugt steht Formel (I) für eine Substanz ausgewählt aus der Gruppe 4-Formylphenylboronsäure, 1,4-Benzendiboronsäure, 3-Fluorphenylboronsäure, 2,4-Difluorphenylboronsäure, 2,5-Dimethoxyphenylboronsäure, Methylboronsäure, 4-Ethylphenylboronsäure, 1-Octylboronsäure, 2-Carboxyphenylboronsäure, 3-Carboxyphenylboronsäure, 4-Carboxyphenylboronsäure, (2-Hydroxymethyl)phenylboronsäure, 4-Cyanophenylboronsäure, 4-(Methansulfonyl)phenylboronsäure, 3,4,5-Trifluorphenylboronsäure oder deren Gemische.

Gemäß einem weiterführenden Gedanken ist somit auch eine Epoxidharz-Zusammensetzung, insbesondere eine flüssige Epoxidharz-Zusammensetzung, Gegenstand der vorliegenden Erfindung, die ein Epoxidharz, insbesondere ein flüssiges Epoxidharz, sowie einen Härter zur Härtung des Epoxidharzes und einen Härtungsbeschleuniger zur beschleunigten Härtung des Epoxidharzes, sowie mindestens eine Boronsäure der allgemeinen Formel (I) umfasst, wobei für Formel (I) gilt: 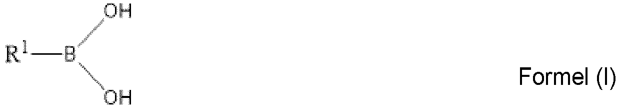 wobei für den Rest R¹ gilt:
R¹ = Alkyl, Hydroxyalkyl oder ein Rest der Formel (II), wobei für Formel (II) gilt 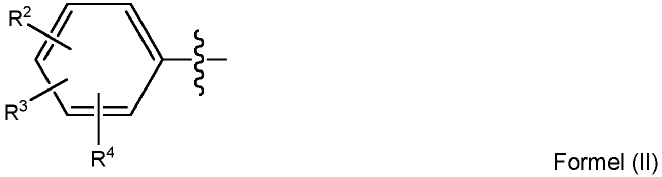 wobei für R², R³, R⁴ unabhängig voneinander gilt und mindestens einen Rest R², R³, R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl, oder B(OH)₂,
wobei die Epoxidharz-Zusammensetzung als Härtungsbeschleuniger einen Härtungsbeschleuniger gemäß Formel (IV) umfasst, wobei für Formel (IV) gilt: 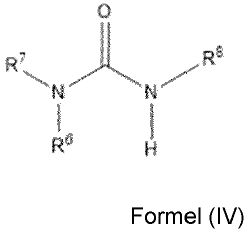 wobei für R⁶, R⁷, R⁸ unabhängig voneinander gilt:
   R⁶, R⁷ = unabhängig voneinander Wasserstoff oder C₁- bis C₅-Alkyl,
   R⁸ = Wasserstoff, C₁- bis C₁₅-Alkyl, C₃- bis C₁₅-Cycloalkyl, Aryl, Alkylaryl,
      mit -NHC(O)NR⁶R⁷substituiertes C₁- bis C₁₅-Alkyl,
      mit -NHC(O)NR⁶R⁷substituiertes C₃- bis C₁₅-Cycloalkyl,
      mit -NHC(O)NR⁶R⁷ substituiertes Aryl oder
      mit -NHC(O)NR⁶R⁷ substituiertes Alkylaryl.

Überraschender Weise hat sich gezeigt, dass derartige Epoxidharz-Zusammensetzungen besonders lagerstabil sind. So hat sich gezeigt, dass erfindungsgemäße Epoxidharz-Zusammensetzungen im Vergleich zu bekannten Epoxidharz-Zusammensetzungen deutlich höhere Lagerstabilitäten von bis zu vier Wochen aufweisen. Die erfindungsgemäßen Epoxidharz-Zusammensetzungen können gegenüber den vergleichbaren Epoxidharz-Zusammensetzungen ohne Boronsäuren unter gleichen Bedingungen um mindestens das dreifache, also um mindestens Faktor 3, länger gelagert werden bzw. sind länger lagerstabil.

Vollkommen überraschend hat sich gezeigt, dass die sonstigen Härtungseigenschaften, wie beispielsweise die Reaktivität der Zusammensetzung, vergleichbar mit Härtungseigenschaften bekannter Zusammensetzungen sind und nicht wesentlich verändert sind. So können diese Zusammensetzungen hervorragend zu Herstellung von Prepregs, Towpregs und 1-Komponenten-Klebstoffe verwendet werden.

Bevorzugte Ausführungen der oben genannten Verwendung, insbesondere der erfindungsgemäßen Verwendung der Boronsäuren sind auch bevorzugte Ausführungen der Epoxidharz-Zusammensezungen.

Somit umfasst die Epoxidharzzusammensetzung bevorzugt eine Boronsäure gemäß Formel (I), wobei R¹ in Formel (I) bevorzugt Alkyl oder Hydroxyalkyl bedeutet, wobei weiter bevorzugt vorgesehen ist, dass R¹ die folgende Bedeutung aufweist:
R¹ = Methyl, Ethyl, n-Propyl, 1-Methylethyl, n-Butyl, 1-Methylpropyl, 2-Methylpropyl,
   n-Pentyl, n-Hexyl, n-Heptyl, n-Octyl, n-Nonyl, n-Decanyl, Hydroxymethyl, 2-Hydroxyethyl, 3-Hydroxypropyl, 4-Hydroxybutyl oder 5-Hydroxypentyl.

Somit umfasst die Epoxidharzzusammensetzung alternativ bevorzugt eine Boronsäure gemäß Formel (I), wobei R¹ in Formel (I) bevorzugt einen Rest der Formel (II) bedeutet, wobei für die Reste R², R³, R⁴ in Formel (II) gilt:
R² = Fluor, Chlor, Brom, lod, Cyano, C₁- bis C₅-Alkyl, Alkoxy, Acyl, Alkylsulfonyl, Aryl, Carboxyl oder B(OH)₂,
R³, R⁴ = Wasserstoff.

Weiter bevorzugt kann R¹ in Formel (I) einen Rest der Formel (II) bedeuten, wobei für die Reste R², R³, R⁴ in Formel (II) gilt:
R² = Fluor, Cyano, Acyl, Alkylsulfonyl oder B(OH)₂,
R³, R⁴ = Wasserstoff.

Noch weiter bevorzugt kann R¹ in Formel (I) einen Rest der Formel (II) bedeuten, wobei für die Reste R², R³, R⁴ in Formel (II) gilt:
R² = Fluor, Cyano, Formyl, Acetyl, Methylsulfonyl, Ethylsulfonyl, n-Propylsulfonyl,
   n-Butylsulfonyl, n-Pentylsulfonyl oder B(OH)₂,
R³, R⁴ = Wasserstoff.

Gemäß einer weiteren Alternative kann die Epoxidharzzusammensetzung bevorzugt auch eine Boronsäure gemäß Formel (I) umfassen, wobei R¹ in Formel (I) bevorzugt einen Rest der Formel (II) bedeutet, wobei für die Reste R², R³, R⁴ in Formel (II) gilt:
R², R³ = unabhängig voneinander Fluor, Chlor, Brom, lod, Cyano, C₁- bis C₅-Alkyl, Alkoxy, Acyl, Alkylsulfonyl, Aryl, Carboxyl oder B(OH)₂,
R⁴ = Wasserstoff.

Weiter bevorzugt kann R¹ in Formel (I) einen Rest der Formel (II) bedeuten, wobei für die Reste R², R³, R⁴ in Formel (II) gilt:
R², R³ = unabhängig voneinander Fluor oder Alkoxy,
R⁴ = Wasserstoff.

Noch weiter bevorzugt kann R¹ in Formel (I) einen Rest der Formel (II) bedeuten, wobei für die Reste R², R³, R⁴ in Formel (II) gilt:
R², R³ = unabhängig voneinander Fluor, Methoxy, Ethoxy, n-Propoxy, n-Butoxy oder n-Pentoxy,
R⁴ = Wasserstoff.

Gemäß einer weiteren Alternative kann die Epoxidharzzusammensetzung bevorzugt auch eine Boronsäure gemäß Formel (I) umfassen, wobei R¹ in Formel (I) bevorzugt einen Rest der Formel (II) bedeutet, wobei für die Reste R², R³, R⁴ in Formel (II) unabhängig voneinander gilt:
R², R³, R⁴ = Fluor, Chlor, Brom, lod, Cyano, C₁- bis C₅-Alkyl, Alkoxy, Acyl, Alkylsulfonyl, Aryl, Carboxyl oder B(OH)₂.

Weiter bevorzugt kann R¹ in Formel (I) einen Rest der Formel (II) bedeuten, wobei für die Reste R², R³, R⁴ in Formel (II) unabhängig voneinander gilt:
R², R³, R⁴ = Fluor oder C₁- bis C₅-Alkyl.

Noch weiter bevorzugt kann R¹ in Formel (I) einen Rest der Formel (II) bedeuten, wobei für die Reste R², R³, R⁴ in Formel (II) unabhängig voneinander gilt:
R², R³, R⁴ = Fluor, Methyl, Ethyl, n-Propyl, 1-Methylethyl, n-Butyl, 1-Methylpropyl, 2-Methylpropyl, 1,1-Dimethylethyl, n-Pentyl.

Somit umfasst die erfindungsgemäße Epoxidharz-Zusammensetzung ganz besonders bevorzugt eine Boronsäure aus der Gruppe 4-Formylphenylboronsäure, 1,4-Benzendiboronsäure, 3-Fluorphenylboronsäure, 2,4-Difluorphenylboronsäure, 2,5-Dimethoxyphenylboronsäure, Methylboronsäure, 4-Ethylphenylboronsäure, 1-Octylboronsäure, 2-Carboxyphenylboronsäure, 3-Carboxyphenylboronsäure, 4-Carboxyphenylboronsäure, (2-Hydroxymethyl)phenylboronsäure, 4-Cyanophenylboronsäure, 4-(Methansulfonyl)phenylboronsäure, 3,4,5-Trifluorphenylboronsäure oder deren Gemische.

Entsprechend der vorliegenden Erfindung können als Härter zur Härtung der Epoxidharze, insbesondere Härter ausgewählt aus der Gruppe Cyanamid oder Guanidine, insbesondere Cyanoguanidine, Nitroguanidine, Acylguanidine oder Biguanidine, verwendet oder eingesetzt werden. Bevorzugt können als Härter Cyanamid oder ein Härter gemäß allgemeiner Formel (III) eingesetzt werden, wobei für Formel (III) gilt 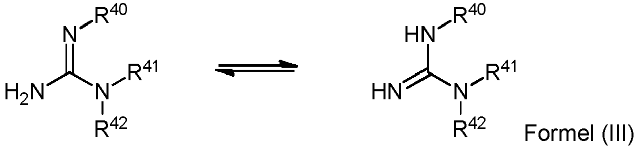 wobei für die Reste R⁴⁰, R⁴¹, R⁴² unabhängig voneinander gilt:
R⁴⁰ = Cyano, Nitro, Acyl oder ein Rest der Formel -(C=X)-R⁴³, mit
   X = Imino oder Sauerstoff,
   R⁴³ = Amino, Alkylamino oder Alkoxy,
R⁴¹ = Wasserstoff, C₁- bis C₅-Alkyl, Aryl, Benzyl, oder Acyl,
R⁴² = Wasserstoff oder C₁- bis C₅-Alkyl.

Somit umfasst die erfindungsgemäße Epoxidharz-Zusammensetzung als Härter insbesondere Cyanamid oder einen Härter gemäß allgemeiner Formel (III). Hierbei sind solche Härter gemäß Formel (III) weiter bevorzugt, für die R⁴¹ = Wasserstoff oder C₁- bis C₅-Alkyl und/oder R⁴² = Wasserstoff oder C₁- bis C₅-Alkyl bedeuten, und C₁- bis C₅-Alkyl gleichzeitig oder unabhängig voneinander für die Reste Methyl, Ethyl, n-Propyl, Isopropyl oder n-Butyl steht.

Ganz besonders bevorzugt können Härter der Formel (III) eingesetzt werden, für die gilt:
R⁴⁰ = Cyano oder Nitro, insbesondere Cyano,
R⁴¹ = Wasserstoff, Methyl oder Ethyl, insbesondere Wasserstoff,
R⁴² = Wasserstoff, Methyl oder Ethyl, insbesondere Wasserstoff.

Als Härter zur Härtung der Epoxidharze der allgemeinen Formel (III) können bevorzugt Cyanoguanidin, 1,1-Dimethyl-3-cyanguanidin, 1-Acetyl-3-cyanguanidin, 1-(p-Chlorphenyl)-3-cyanguanidin, Nitroguanidin, 1-Methyl-3-nitroguanidin, 1-Ethyl-3-nitroguanidin, 1-Butyl-3-nitroguanidin, 1-Benzyl-3-nitroguanidin, Formylguanidin, Acetylguanidin, Carbamoylguanidin oder Methoxycarbonylguanidin, besonders bevorzugt Cyanoguanidin, eingesetzt werden. Diese Cyanoguanidin-Derivate oder Nitroguanidin-Derivate zeichnen sich durch eine besonders hohe Latenz aus.

Alternativ besonders bevorzugt kann gemäß der vorliegenden Erfindung auch Cyanamid als Härter zur Härtung der Epoxidharze eingesetzt werden.

Als Härtungsbeschleuniger zur Beschleunigung der Härtung mittels des Härters werden gemäß der vorliegenden Erfindung Harnstoffderivate gemäß Formel (IV) verwendet oder eingesetzt, wobei für Formel (IV) gilt 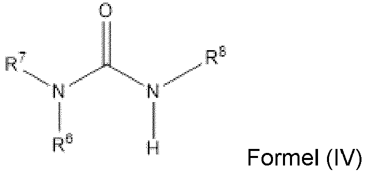 wobei für R⁶, R⁷, R⁸ unabhängig voneinander gilt:
R⁶, R⁷ = unabhängig voneinander Wasserstoff oder C₁- bis C₅-Alkyl,
R⁸ = Wasserstoff, C₁- bis C₁₅-Alkyl, C₃- bis C₁₅-Cycloalkyl, Aryl, Alkylaryl,
   mit -NHC(O)NR⁶R⁷substituiertes C₁- bis C₁₅-Alkyl,
   mit -NHC(O)NR⁶R⁷ substituiertes C₃- bis C₁₅-Cycloalkyl,
   mit -NHC(O)NR⁶R⁷ substituiertes Aryl oder
   mit -NHC(O)NR⁶R⁷ substituiertes Alkylaryl.

Somit umfasst die erfindungsgemäße Epoxidharz-Zusammensetzung als Härtungsbeschleuniger einen Härtungsbeschleuniger gemäß allgemeiner Formel (IV).

Von den mit Formel (IV) beschriebenen Harnstoffderivaten können gemäß der vorliegenden Erfindung aromatische Harnstoffderivate bevorzugt eingesetzt werden. Weiter bevorzugt werden hierbei aromatische Harnstoffderivate der Formel (IV) eingesetzt, wobei für die Reste R⁶, R⁷, R⁸ unabhängig gilt:
R⁶, R⁷ = unabhängig voneinander C₁- bis C₅-Alkyl, insbesondere Methyl oder Ethyl,
R⁸ = Aryl, Arylalkyl, oder
   mit -NHC(O)NR⁶R⁷ substituiertes Aryl oder
   mit -NHC(O)NR⁶R⁷ substituiertes Alkylaryl.

Weiter bevorzugt können die Reste R⁶, R⁷, R⁸ unabhängig voneinander bedeuten:
R⁶, R⁷ = unabhängig voneinander C₁- bis C₅-Alkyl, insbesondere Methyl oder Ethyl,
R⁸ = mit -NHC(O)NR⁶R⁷ substituiertes Alkylaryl.

Somit sind gemäß der vorliegenden Erfindung Harnstoffderivate gemäß Formel (V) besonders bevorzugt, wobei für Formel (V) gilt: 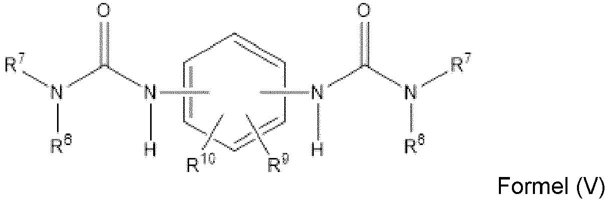 und wobei die Reste R⁶, R⁷, R⁹, R¹⁰ unabhängig voneinander gilt:
R⁶, R⁷ = unabhängig voneinander Wasserstoff oder C₁- bis C₅-Alkyl, insbesondere Wasserstoff, Methyl oder Ethyl,
R⁹, R¹⁰ = unabhängig voneinander Wasserstoff oder C₁- bis C₅-Alkyl, insbesondere Wasserstoff, Methyl oder Ethyl.

Bevorzugt bedeuten die Reste R⁶, R⁷, R⁹ in Zusammenhang mit der Formel (V) jeweils einen Methylrest und R¹⁰ bedeutet Wasserstoff. Besonders bevorzugt ist 1,1 '-(4-Methyl-m-phenylen)bis(3,3-dimethylharnstoff) und 1,1'-(2-Methyl-m-phenylen)bis(3,3-dimethylharnstoff).

Von den mit Formel (IV) beschriebenen Harnstoffderivaten können weiterhin bevorzugt aliphatische Harnstoffderivate eingesetzt werden. Weiter bevorzugt werden hierbei aliphatische Harnstoffderivate der Formel (IV) wobei für die Reste R⁶, R⁷, R⁸ unabhängig gilt:
R⁶, R⁷ = unabhängig voneinander Wasserstoff oder C₁- bis C₅-Alkyl, insbesondere Wasserstoff, Methyl oder Ethyl,
R⁸ = Wasserstoff oder C₁- bis C₁₅-Alkyl, C₃- bis C₁₅-Cycloalkyl,
   mit -NHC(O)NR⁵R⁶substituiertes C₁- bis C₁₅-Alkyl,
   mit -NHC(O)NR⁵R⁶substituiertes C₃- bis C₁₅-Cycloalkyl.

Weiterhin bevorzugt sind aliphatische Harnstoffderivate gemäß Formel (IV), in welchen R⁶ und R⁷ die oben angegebene Bedeutung, insbesondere Wasserstoff, Methyl oder Ethyl, haben, und R⁸ Wasserstoff oder C₁- bis C₁₅-Alkyl, insbesondere Methyl, Ethyl, n-Propyl, 1-Methylethyl, n-Butyl, 1-Methylpropyl, 2-Metylpropyl, n-Pentyl, n-Hexyl, n-Heptyl, n-Octyl, n-Nonyl oder n-Decanyl bedeutet. Besonders bevorzugt bedeuten die Reste R⁶, R⁷ in Formel (III) jeweils Methyl und R⁸ n-Butyl. Besonders bevorzugt ist N-(n-Butyl-)-N',N'-dimethylharnstoff.

Weiterhin bevorzugt sind aliphatische Harnstoffderivate gemäß Formel (IV), in welchen R⁶ und R⁷ die oben angegebene Bedeutung haben, insbesondere Wasserstoff, Methyl oder Ethyl, und R³ mit -NHC(O)NR¹R² substituiertes C₁- bis C₁₅-Cycloalkyl bedeutet.

Somit sind gemäß der vorliegenden Erfindung Harnstoffderivate gemäß Formel (VI) besonders bevorzugt, wobei für Formel (VI) gilt und 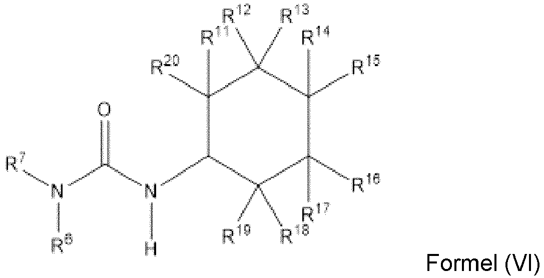 wobei für die Reste gleichzeitig oder unabhängig voneinander gilt:
R⁶, R⁷ = unabhängig voneinander Wasserstoff oder C₁- bis C₅-Alkyl, insbesondere Wasserstoff, Methyl oder Ethyl;
R¹¹, R¹², R¹³, R¹⁴, R¹⁵, R¹⁶, R¹⁷, R¹⁸, R¹⁹, R²⁰ = unabhängig voneinander Wasserstoff, C₁- bis C₅-Alkyl oder mit -NHC(O)NR⁶R⁷ substituiertes C₁- bis C₅-Alkyl.

Weiterhin bevorzugt sind Härtungsbeschleuniger umfassend aliphatische Harnstoffderivate der Formel (VI) in der R⁶ und R⁷ gleichzeitig oder unabhängig voneinander Wasserstoff, Methyl oder Ethyl und R¹¹, R¹², R¹³, R¹⁴, R¹⁵, R¹⁶, R¹⁷, R¹⁸, R¹⁹, R²⁰ unabhängig voneinander Wasserstoff, Methyl, Ethyl, -NHC(O)NR⁶R⁷ oder mit -NHC(O)NR⁶R⁷ substituiertes Methyl oder Ethyl bedeuten. Besonders bevorzugt ist 1-(N,N-Dimethylharnstoff)-3-(N,N-dimethylharnstoff-methyl)-3,5,5-trimethylcyclohexan, nachfolgend auch N'-[3-[[[(dimethylamino)carbonyl]-amino]methyl]-3,5,5-trimethylcyclohexyl]-N,N-dimethylharnstoff (also R⁶ = R⁷ = R¹² = R¹³ = R¹⁶ = Methyl und R¹⁷ = -CH₂-NHC(O)N(CH₃)₂ und R¹¹ = R¹⁴ = R¹⁵ = R¹⁸ = R¹⁹ = R²⁰ = Wasserstoff).

Somit ist auch eine Epoxidharz-Zusammensetzung bevorzugt, insbesondere eine flüssige Epoxidharz-Zusammensetzung, die ein Epoxidharz, insbesondere ein flüssiges Epoxidharz, sowie einen Härter zur Härtung des Epoxidharzes und einen Härtungsbeschleuniger zur beschleunigten Härtung des Epoxidharzes ausgewählt aus der Gruppe der Härtungsbeschleuniger gemäß Formel (V) oder Formel (VI), sowie mindestens eine Boronsäure der allgemeinen Formel (I) umfasst, wobei für Formel (I) gilt: 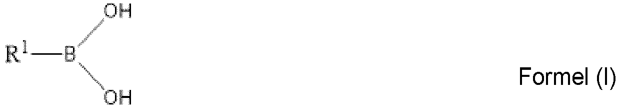 wobei für den Rest R¹ gilt:
R¹ = Alkyl, Hydroxyalkyl oder ein Rest der Formel (II), wobei für Formel (II) gilt 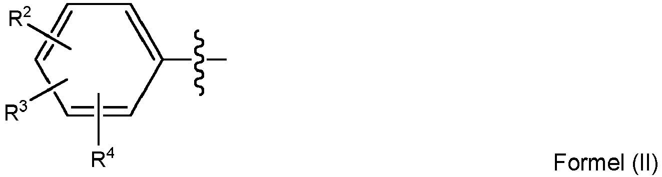 wobei für R², R³, R⁴ unabhängig voneinander gilt und mindestens ein Rest R², R³, R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl, oder B(OH)₂,
   wobei für Formel (V) gilt: 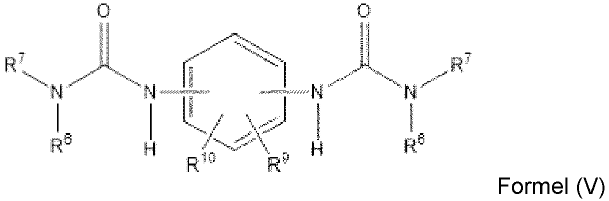 und wobei die Reste R⁶, R⁷, R⁹, R¹⁰ unabhängig voneinander gilt:
R⁶, R⁷ = unabhängig voneinander Wasserstoff oder C₁- bis C₅-Alkyl, insbesondere Wasserstoff, Methyl oder Ethyl,
R⁹, R¹⁰ = unabhängig voneinander Wasserstoff oder C₁- bis C₅-Alkyl, insbesondere Wasserstoff, Methyl oder Ethyl,
   wobei für Formel (VI) gilt 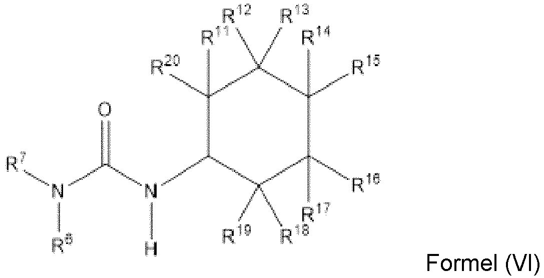 wobei für die Reste gleichzeitig oder unabhängig voneinander gilt:
R⁶, R⁷ = unabhängig voneinander Wasserstoff oder C₁- bis C₅-Alkyl, insbesondere Wasserstoff, Methyl oder Ethyl;
R¹¹, R¹², R¹³, R¹⁴, R¹⁵, R¹⁶, R¹⁷, R¹⁸, R¹⁹, R²⁰ = unabhängig voneinander Wasserstoff, C₁- bis C₅-Alkyl oder mit -NHC(O)NR⁶R⁷ substituiertes C₁- bis C₅-Alkyl.

Somit ist auch eine Epoxidharz-Zusammensetzung bevorzugt, insbesondere eine flüssige Epoxidharz-Zusammensetzung, die ein Epoxidharz, insbesondere ein flüssiges Epoxidharz, sowie einen Härter zur Härtung des Epoxidharzes ausgewählt aus der Gruppe der Härter gemäß Formel (III) und einen Härtungsbeschleuniger zur beschleunigten Härtung des Epoxidharzes ausgewählt aus der Gruppe der Härtungsbeschleuniger gemäß Formel (V) oder Formel (VI), sowie mindestens eine Boronsäure der allgemeinen Formel (I) umfasst, wobei für Formel (I) gilt: 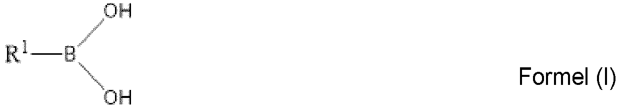 wobei für den Rest R¹ gilt:
R¹ = Alkyl, Hydroxyalkyl oder ein Rest der Formel (II), wobei für Formel (II) gilt 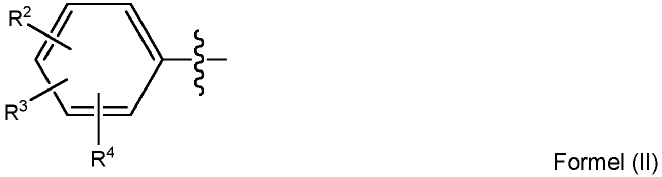 wobei für R², R³, R⁴ unabhängig voneinander gilt und mindestens einen Rest R², R³, R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl, oder B(OH)₂,

wobei für Formel (III) gilt 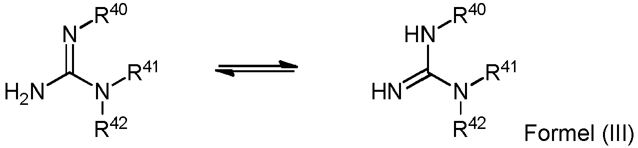 wobei für die Reste R⁴⁰, R⁴¹, R⁴² unabhängig voneinander gilt:
   R⁴⁰ = Cyano, Nitro, Acyl oder ein Rest der Formel -(C=X)-R⁴³, mit
      X = Imino oder Sauerstoff,
      R⁴³ = Amino, Alkylamino oder Alkoxy,
   R⁴¹ = Wasserstoff, C₁- bis C₅-Alkyl, Aryl, Benzyl, oder Acyl,
   R⁴² = Wasserstoff oder C₁- bis C₅-Alkyl,
wobei für Formel (V) gilt: 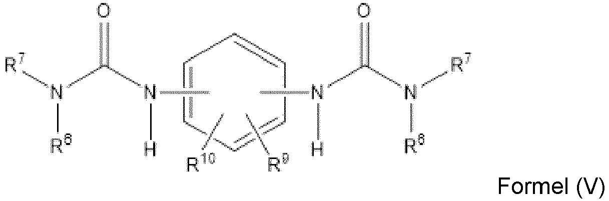
und wobei für die Reste R⁶, R⁷, R⁹, R¹⁰ unabhängig voneinander gilt:
   R⁶, R⁷ = unabhängig voneinander Wasserstoff oder C₁- bis C₅-Alkyl, insbesondere Wasserstoff, Methyl oder Ethyl,
   R⁹, R¹⁰ = unabhängig voneinander Wasserstoff oder C₁- bis C₅-Alkyl, insbesondere Wasserstoff, Methyl oder Ethyl,
wobei für Formel (VI) gilt 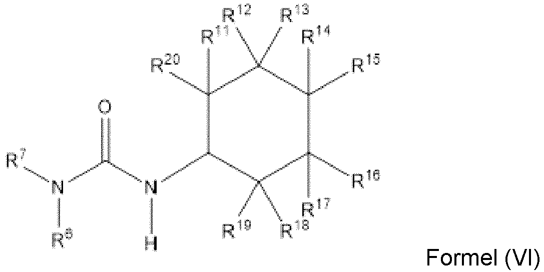
wobei für die Reste gleichzeitig oder unabhängig voneinander gilt:
   R⁶, R⁷ = unabhängig voneinander Wasserstoff oder C₁- bis C₅-Alkyl, insbesondere Wasserstoff, Methyl oder Ethyl;
   R¹¹, R¹², R¹³, R¹⁴, R¹⁵, R¹⁶, R¹⁷, R¹⁸, R¹⁹, R²⁰ = unabhängig voneinander Wasserstoff, C₁- bis C₅-Alkyl oder mit -NHC(O)NR⁶R⁷ substituiertes C₁- bis C₅-Alkyl.

Erfindungsgemäß umfasst die Epoxidharz-Zusammensetzung wenigstens ein Epoxidharz, insbesondere ein flüssiges Epoxidharz. Vorzugsweise ist das Epoxidharz oder das flüssige Epoxidharz ein Polyether mit mindestens einer, vorzugsweise mindestens zwei Epoxidgruppen und noch weiter bevorzugt mit mindestens drei Epoxidharzgruppen. Diese Epoxidharze oder flüssigen Epoxidharze können mindestens eine, vorzugsweise mindestens zwei Epoxidgruppen aufweisen und dabei gesättigt oder ungesättigt, aliphatisch, cycloaliphatisch, aromatisch oder heterocyclisch sein. Außerdem können diese Epoxidharze oder flüssigen Epoxidharze, Substituenten wie Halogene, Phosphor- und Hydroxyl-Gruppen aufweisen. Bevorzugt werden hierbei Bisphenol-basierte Epoxidharze, insbesondere Bisphenol-A-diglycidylether sowie das mit Brom substituierte Derivat (Tetrabrombisphenol A) oder Bisphenol-F-diglycidylether, Novolak-Epoxidharze, insbesondere Epoxyphenol-Novolak oder aliphatische Epoxidharze eingesetzt. Epoxidharze auf Basis Glycidylpolyether von 2,2-Bis(4-hydroxyphenyl)-propan

(Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolaken sowie auf Basis von Anilin oder substituierten Anilinen wie beispielsweise p-Aminophenol oder 4,4'-Diaminodiphenylmethane sind besonders bevorzugt. Ganz besonders bevorzugt sind Epoxidharze auf Basis Glycidylpolyether von 2,2-Bis(4-hydroxyphenyl)-propan (Bisphenol A) sowie Epoxidharze auf Basis Glycidylpolyether von 2,2-Bis(4-hydroxyphenyl)methan (Bisphenol F).

Weiter bevorzugt können gemäß der vorliegenden Erfindung solche Epoxidharze, insbesondere flüssige Epoxidharze eingesetzt werden die einen EEW-Wert im Bereich von EEW = 100 bis 1500 g/eq, insbesondere im Bereich von EEW = 100 bis 1000 g/eq, insbesondere im Bereich von EEW = 100 bis 600 g/eq, weiter bevorzugt im Bereich im Bereich von EEW = 100 bis 400 g/eq und ganz besonders bevorzugt im Bereich von EEW = 100 bis 300 g/eq, aufweisen.

Durch den Zusatz weiterer, handelsüblicher Additive, wie sie dem Fachmann zur Härtung von Epoxidharzen bekannt sind, kann das Härtungsprofil der erfindungsgemäßen Formulierungen variiert werden.

Üblicherweise werden in Prepreg-, Towpreg, und Klebstoff Formulierungen Reaktivverdünner und thermoplastische Additive eingesetzt.

So kann die erfindungsgemäße Epoxidharz-Matrix neben dem Epoxidharz, dem Härter und dem Härtungsbeschleuniger auch einen Reaktivverdünner und/oder ein thermoplastisches Additiv enthalten.

Als Reaktivverdünner können in dem erfindungsgemäßen Verfahren bzw. in der Epoxidharz-Matrix insbesondere Glycidylether zum Einsatz gebracht werden. Dabei können weiter bevorzugt monofunktionelle, di-, sowie polyfunktionelle Glycidylether eingesetzt werden. Hier sind insbesondere Glycidylether, Diglycidylether, Triglycidylether, Polyglycidylether und Multiglycidylether und deren Kombinationen zu nennen. Besonders bevorzugt können Glycidylether aus der Gruppe umfassend 1,4-Butandiol-Diglycidylether, Trimethylolpropan-Triglycidylether, 1,6-Hexandiol-Diglycidylether, Cyclohexandimethanol-Diglycidylether, C₈-C₁₀-Alkohol-Glycidylether, C₁₂-C₁₄-Alkohol-Glycidylether, Kresol-Glycidylether, Poly(tetramethylenoxid)-Diglycidylether, 2-Ethylhexyl-Glycidylether, Polyoxypropylenglycol-Diglycidylether, Polyoxypropylenglycol-Triglycidylether, Neopentylglykol-Diglycidylether, p-tert-Butylphenol-Glycidylether, Polyglycerol-Multiglycidylether, sowie deren Kombinationen eingesetzt werden.

Ganz besonders bevorzugte Glycidylether sind 1,4-Butandiol-Diglycidylether, Trimethylolpropan-Triglycidylether, Neopentylglykol-Diglycidylether, 1,6-Hexandiol-Diglycidylether, Cyclohexandimethanol-Diglycidylether sowie deren Kombinationen.

Typischerweise werden thermoplastische Additive aus der Gruppen der Phenoxyharze, Acrylat-, Acryl-, Acrylonitril-, Polyetherimide-, Polyetherketon-, oder Polysulfonpolymere gewählt. Auf Grund deren positiven Einfluss auf das Fliessverhalten bei der Verarbeitung, und die mechansichen Eigenschaften des gehärteten Bauteils, kommen bevorzugt Phenoxyharze, Polyacrylate, oder Polysulfone zum Einsatz.

Additive zur Verbesserung der Verarbeitbarkeit der unausgehärteten Epoxidharz-Zusammensetzungen oder zur Anpassung der thermisch-mechanischen Eigenschaften der duroplastischen Produkte an das Anforderungsprofil umfassen beispielsweise Füllstoffe, Rheologieadditive wie Thixotropierungsmittel oder Dispergieradditive, Defoamer, Farbstoffe, Pigmente, Zähmodifikatoren, Schlagzähverbesserer, Nano-Füllstoffe, Nano-Faser, oder Brandschutzadditive.

Die einzusetzenden Mengen an erfindungsgemäßen Boronsäuren sowie den Härtern und Härtungsbeschleunigern in den Epoxidharz-Zusammensetzungen können gemäß der vorliegenden Erfindung in Bezug auf die einzusetzende Menge an Epoxidharzen abgestimmt werden. Bevorzugt können bezogen auf 100 Gewichtsteile Epoxidharz insbesondere 0,05 bis 3,0 Gewichtsteile Boronsäure gemäß Formel (I), weiter bevorzugt 0,1 bis 2,0 Gewichtsteile Boronsäure gemäß Formel (I) und besonders bevorzugt 0,1 bis 1,0 Gewichtsteile Boronsäure gemäß Formel (I) eingesetzt werden.

Weiterhin können bezogen auf 100 Gewichtsteile Epoxidharz insbesondere 1,0 bis 15 Gewichtsteile Härter, insbesondere aus der Gruppe Cyanamid oder der Gruppe der Härter gemäß Formel (III), weiter bevorzugt 3,0 bis 12,0 Gewichtsteile Härter, insbesondere aus der Gruppe Cyanamid oder der Gruppe der Härter gemäß Formel (III), und besonders bevorzugt 4,0 bis 10,0 Gewichtsteile, insbesondere aus der Gruppe Cyanamid oder der Gruppe der Härter gemäß Formel (III), eingesetzt werden.

Weiterhin können bezogen auf 100 Gewichtsteile Epoxidharz insbesondere 0,1 bis 9 Gewichtsteile Härtungsbeschleuniger, insbesondere aus der Gruppe der Härtungsbeschleuniger gemäß Formel (IV) oder Formel (V) oder Formel (VI), weiter bevorzugt 0,5 bis 5,0 Gewichtsteile Härtungsbeschleuniger, insbesondere aus der Gruppe der Härtungsbeschleuniger gemäß Formel (IV) oder Formel (V) oder Formel (VI), und besonders bevorzugt 0,5 bis 3,0 Gewichtsteile Härtungsbeschleuniger, insbesondere aus der Gruppe der Härtungsbeschleuniger gemäß Formel (IV) oder Formel (V) oder Formel (VI), eingesetzt werden.

Dabei kann die Epoxidharz-Zusammensetzung bevorzugt den Härter und die Boronsäure in einem Gewichtsverhältnis Härter zu Boronsäure umfassen, das einem Verhältnis im Bereich 1 : 1 bis 240 : 1, weiter bevorzugt von 3 : 1 bis 100 : 1 und besonders bevorzugt von 6 : 1 bis 40 : 1, entspricht.

Weiter bevorzugt kann die Epoxidharz-Zusammensetzung den Härtungsbeschleuniger und die Boronsäure in einem Gewichtsverhältnis Härtungsbeschleuniger zu Boronsäure umfassen, das einem Verhältnis im Bereich 0,05 : 1 bis 160 : 1, weiter bevorzugt von 0,5 : 1 bis 50 : 1 und besonders bevorzugt von 0,7 : 1 bis 15 : 1, entspricht.

Faserverbundwerkstoffe, insbesondere Prepregs und Towpregs, für die Fertigung von Faserverbundteile die Verwendung finden in der Sport und Freizeit-, Automotive-, Luft und Raumfahrt Markt, und für die Fertigung von Rotorblätter für den Windkraftanlagen. Für diese Faserverbundwerkstoffe können alle, den Fachmann bekannten, Fasertypen eingesetzt werden. Beispiel davon, ohne das sich darauf zu beschränken, sind Glas-, Carbon-, Aramid-, Kunststoff-, Basalt-, und Naturfaser, oder Steinwolle.

Diese Faserverbundwerkstoffe können in Verarbeitungsverfahren wie zum Beispiel, Autoklaven, "Out-Of-Autoclave", Vakuumsack und Pressverfahren verarbeitet werden.

Die erfindungsgemäßen Epoxidharzmischungen sind auch für die Fertigung von 1-Komponenten-Klebstoffe geeignet. Diese Klebstoffe finden ihre Anwendung in zum Beispiel den Automobil und Flugzeugbau.

Neben den hierin beschriebenen Verwendungen betrifft die vorliegende Erfindung in gleicher Weise ein Verfahren zur Erhöhung der Lagerstabilität von Epoxidharz-Zusammensetzungen umfassend ein Epoxidharz, einen Härter zur Härtung des Epoxidharzes und einen Härtungsbeschleuniger zur beschleunigten Härtung des Epoxidharzes durch Zugabe von Boronsäuren der allgemeinen Formel (I)
wobei für Formel (I) gilt: 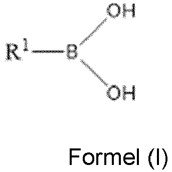 wobei für den Rest R¹ gilt:
R¹ = Alkyl, Hydroxyalkyl oder ein Rest der Formel (II), wobei für Formel (II) gilt: 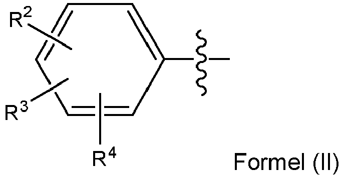 wobei für R², R³, R⁴ unabhängig voneinander gilt und mindestens einen Rest R², R³, R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl oder B(OH)₂,
wobei die Epoxidharz-Zusammensetzung als Härtungsbeschleuniger einen Härtungsbeschleuniger gemäß Formel (IV) umfasst, wobei für Formel (IV) gilt: 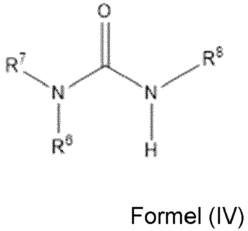 wobei für R⁶, R⁷, R⁸ unabhängig voneinander gilt:
R⁶, R⁷ = unabhängig voneinander Wasserstoff oder C₁- bis C₅-Alkyl,
R⁸ = Wasserstoff, C₁- bis C₁₅-Alkyl, C₃- bis C₁₅-Cycloalkyl, Aryl, Alkylaryl,
   mit -NHC(O)NR⁶R⁷substituiertes C₁- bis C₁₅-Alkyl,
   mit -NHC(O)NR⁶R⁷substituiertes C₃- bis C₁₅-Cycloalkyl,
   mit -NHC(O)NR⁶R⁷ substituiertes Aryl oder
   mit -NHC(O)NR⁶R⁷ substituiertes Alkylaryl.

Die bevorzugten Ausführungen des erfindungsgemäßen Verfahrens sind wie hierin für die erfindungsgemäße Verwendung und die erfindungsgemäße Epoxidharz-Zusammensetzung beschrieben.

### Beispiele

### Verwendete Materialien

Produktname: EPIKOTE^{™} Resin 828 (Hexion Inc.)
Unmodifiziertes Bisphenol A Epoxidharz (EEW = 184 - 190 g/eq)
(Viskosität bei 25°C = 12 - 14 Pa*s)
Produktname: Araldite^{®} MY 721 (Huntsman Corp.)
Tetrafunktionelles Epoxidharz; N,N,N',N'-Tetraglycidyl-4,4'-methylenbisbenzolamin Klare, braune Flüssigkeit, (EEW = 109 - 116 g/eq)
(Viskosität bei 50°C = 3000 - 6000 mPa*s)
Produktname: Epilox^{®} F17-00 (LEUNA-Harze GmbH)
Unmodifiziertes Bisphenol F Epoxidharz (EEW = 165 - 173 g/eq)
(Viskosität bei 25°C = 2500 - 4500 mPa*s)
Produktname: DYHARD^{®} 100S (AlzChem Trostberg GmbH)
Latenter Härter, Dicyandiamid, Feststoff (Partikelgröße 98% ≤ 10 µm)
Harnstoff 1: 1,1-(4-Methyl-m-phenylen)-bis-(3,3-dimethylharnstoff) (AlzChem Trostberg GmbH)
Latenter, bifunktioneller Beschleuniger gemäß Formel V
Feststoff (Partikelgröße 98% ≤ 10 µm)
Harnstoff 2: Fenuron (AlzChem Trostberg GmbH)
Latenter, monofunktioneller Beschleuniger gemäß Formel IV
Feststoff (Partikelgröße 98% ≤ 10 µm)
Harnstoff 3: N'-[3-[[[(dimethylamino)carbonyl]amino]methyl]-3,5,5-trimehtylcyclohexyl]-N,N-dimethyl-Harnstoff (AlzChem Torstberg GmbH) Latenter, bifunktioneller Beschleuniger gemäß Formel VI, Feststoff
Harnstoff 4: 1-Butyl-3,3-dimethylharnstoff (abcr GmbH)
Latenter, monofunktioneller Beschleuniger gemäß Formel IV, (Siedepunkt: 100 - 110°C)
Produktname: 4-Carboxyphenylboronsäure; (abcr GmbH)
Feststoff (Reinheit = 97%; Schmelzpunkt = 238°C)
Produktname: 3-Carboxyphenylboronsäure; (abcr GmbH)
Feststoff
Produktname: 2-Carboxyphenylboronsäure; (abcr GmbH)
Feststoff
Produktname: 4-Cyanophenylboronsäure; (abcr GmbH) Feststoff (Reinheit = 97%; Schmelzpunkt >300°C)
Produktname: 4-(Methansulfonyl)phenylboronsäure; (abcr GmbH) Feststoff (Schmelzpunkt = 275°C)
Produktname: 4-Formylphenylboronsäure; (Alfa Aesar)
Feststoff (Reinheit = 97%; Schmelzpunkt = 260 - 266°C)
Produktname: 3-Fluorphenylboronsäure; (abcr GmbH)
Feststoff, (Schmelzpunkt = 220°C)
Produktname: 2,5-Dimethoxyphenylboronsäure; (Alfa Aesar)
Feststoff (Reinheit = 98%; Schmelzpunkt = 92 - 94°C)
Produktname: Methylboronsäure; (Alfa Aesar)
Feststoff (Reinheit = 97%; Schmelzpunkt = 89 - 94°C)
Produktname: 4-Ethylphenylboronsäure; (Alfa Aesar)
Feststoff (Reinheit = 97%)
(Schmelzpunkt = 150 - 154°C)
Produktname: 1-Octylboronsäure; (Alfa Aesar)
Feststoff (Reinheit = 97%; Schmelzpunkt = 81 - 85°C)
Produktname: (2-Hydroxymethyl)phenylboronsäure (abcr GmbH)
Feststoff
Produktname: 2,4-Difluorphenylboronsäure (Alfa Aesar)
Feststoff (Reinheit = 97%; Schmelzpunkt = 247 - 250°C)
Produktname: 3,4,5-Trifluorphenylboronsäure (Sigma-Aldrich)
Feststoff (Reinheit ≥95%; Schmelzpunkt = 290 - 295°C)
Produktname: 1,4-Benzendiboronsäure (Alfa Aesar)
Feststoff (Reinheit = 96%; Schmelzpunkt >300°C)
Produktname: VESTAMIN^{®} IPD; (Evonik)
Isophorondiamin, Aminischer Härter, Flüssigkeit
Produktname: Aradur^{®} 917 (Huntsman Cooperation)
Anhydridischer Flüssighärter bestehend aus Tetrahydro-4-methylphthalsäureanhydrid, 1,2,3,6-Tetrahydro-3-methylphthalsäureanhydrid, 1,2,3,6-Tetrahydrophthalsäureanhydrid und Hexahydro-4-methylphthalsäureanhydrid
(Viskosität bei 25°C = 50 - 100 mPa.s)
Produktname: Araldite^{®} LY 1556 SP (Huntsman Cooperation)
Formuliertes, Bisphenol A basiertes Epoxidharz
(Epoxidgehalt = 5,30 - 5,45 eq/kg) (Viskosität bei 25°C = 10 - 12 Pa.s)
Produktname: 1-Methylmidazol (Carl Roth GmbH & Co KG)
Beschleuniger, Flüssigkeit (Siedepunkt 195 - 197°C)
Produktname: 2-Ethyl-4-methylimidazol (Alfa Aesar)
Beschleuniger, Feststoff (Schmelzpunkt 45°C)

### Herstellung der Mischungen

Für die Untersuchungen der in den Beispielen genannten Rezepturen werden die Einzelkomponenten der jeweiligen Rezeptur in eine Reibschale für mehrere Minuten bis zur Homogenität vermischt. Die in den Tabellen 1 bis 7 gelisteten Formulierungen sind dazu auf 10 g Epoxidharz umgerechnet worden.

### Verwendete Methoden zur Charakterisierung der Zusammensetzungen

### DSC-Untersuchungen

DSC-Messungen werden an einem dynamischen Wärmestromdifferenz-Kalorimeter DSC 1 oder DSC 3 (Mettler Toledo) durchgeführt.
a) Tg- Bestimmung:
   Für die Bestimmung der maximalen Glasübergangstemperatur (End-Tg) wird eine Probe der ausgehärteten Formulierung folgendem DSC-Temperaturprogramm unterworfen: Aufheizen von 30 - 200 °C mit 20 K/min, 10 min Halten bei 200 °C, Abkühlen von 200 - 50 °C mit 20 K/min, 5 min Halten bei 50 °C, Aufheizen von 50 - 200 °C mit 20 K/min, 10 min Halten bei 200 °C, Abkühlen von 200 - 50 °C mit 20 K/min, 5 min Halten bei 50 °C, Aufheizen von 50 - 220 °C mit 20 K/min. Aus den beiden letzten Aufheizzyklen wird jeweils durch Anlegen einer Tangente im Wendepunkt der größten Änderung der Wärmekapazität (ΔCp) die Glasübergangstemperatur bestimmt und der Mittelwert als End-TG angegeben.
b) Isotherme DSC:
   Eine Probe der Formulierung wird bei der angegebenen Temperatur für die angegebene Zeit konstant gehalten (isotherme Härtung der Formulierung). Die Auswertung erfolgt durch Bestimmung der Zeit des 90 %-Umsatzes (als Maß für das Ende des Aushärtevorgangs) des exothermen Reaktionspeaks.
c) Latenz
   Zur Ermittlung der Latenz (Lagerstabilität) werden ca. 10 g der jeweiligen Formulierung frisch zubereitet und danach bei Temperatur von 40 °C oder 60°C in einem Wärmeschrank gelagert. Durch regelmäßiges Messen der dynamischen Viskosität wird die fortschreitende Vernetzung (Härtung) der Formulierung unter diesen Lagerungsbedingungen erfasst. Die Bestimmung der dynamischen Viskosität erfolgt mit einem Haake-Viskosimeter [Kegel (1 °)-Platte-Methode, Messung bei 25 °C, Scherrate 5,0 s-1]. Eine Formulierung wird bis zur Verdopplung der Viskosität als lagerstabil (noch zur Verarbeitung geeignet) eingestuft.

### Auflistung der Ergebnisse

**Tabelle 1: Latenz der Epoxidharz-Zusammensetzungen im Vergleich**

| **Rezepturen** | **Ref.1** | **A** | **B** | **C** | **D** | **E** | **F** | **G** |
|---|---|---|---|---|---|---|---|---|
| EPIKOTE^{™} Resin 828 | 100 | 100 | 100 | 100 | 100 | 100 | 100 | 100 |
| DYHARD^{®} 100S | 6,5 | 6,5 | 6,5 | 6,5 | 6,5 | 6,5 | 6,5 | 6,5 |
| Harnstoff 1 | 3,0 | 3,0 | 3,0 | 3,0 | 3,0 | 3,0 | 3,0 | 3,0 |
| 4-Formylphenylboronsäure | | 0,4 | | | | | | |
| 1,4-Benzendiboronsäure | | | 0,4 | | | | | |
| 3-Fluorphenylboronsäure | | | | 0,4 | | | | |
| 2,5-Dimethoxyphenylboronsäure | | | | | 0,4 | | | |
| Methylboronsäure | | | | | | 0,4 | | |
| 4-Ethylph enylboronsäu re | | | | | | | 0,4 | |
| 1-Octylboronsäure | | | | | | | | 0,4 |

| **Dynamischer DSC** | | | | | | | | |
|---|---|---|---|---|---|---|---|---|
| End-Tg [°C] | 135 | 138 | 137 | 138 | 135 | 138 | 135 | 137 |

| **Isotherme DSC; 1 Std. bei 140°C** | | | | | | | | |
|---|---|---|---|---|---|---|---|---|
| Zeit bis 90 % Umsatz [min] | 11 | 14 | 12 | 11 | 13 | 13 | 12 | 10 |
| Latenz bei 40 °C [Tage] | 3 | 28 | 33 | 23 | 14 | 10 | 10 | 10 |

### Beschreibung und Wertung der Ergebnisse aus Tabelle 1

Der Vergleich der erfindungsgemäßen Beispiele A bis G mit der Ref. 1, bestehend aus einem technisch üblichen Härter und Härtungsbeschleuniger in einem handelsüblichen Epoxidharz, zeigt, dass bei der Verwendung der erfindungsgemäßen Boronsäuren vergleichbare, charakteristische Werte für den Aushärtevorgang ermittelt werden können. Dies lässt sich anhand der Werte aus der DSC-Analyse feststellen, darunter die Bestimmung des End-Tg und der Aufnahme einer isothermen DSC bei 140 °C zur Ermittlung des 90 %-igen Umsatzes der Härtung. Zudem kann über die Latenzmessung gezeigt werden, dass durch Zugabe der erfindungsgemäßen Boronsäuren (Beispiele A bis G) die Latenz bei 40 °C in Vergleich zu den Ref. 1 mit einem Faktor 3 bis 10 verlängert werden kann.

Somit zeigt der Vergleich der Rezepturen Ref. 1 und den Rezepturen A bis G, dass mit Hilfe der erfindungsgemäßen Boronsäuren epoxidharzbasierte Prepregs, Towpregs und Klebstoffe eine verlängerte Latenz bis über vier Wochen bei 40 °C haben können bei unveränderten Aushärteeigenschaften. Für den Fachmann, Hersteller und Anwender von Prepregs, Towpregs und Klebstoffen, bedeutet dies eine einfachere Handhabung dieser Produkte, dass diese ohne Kühlung gelagert, transportiert und verarbeitet werden können. Ebenso wird die Lagerfähigkeit von Prepregs, Towpregs und Klebstoffen erhöht, sodass Produkte mit den genannten Rezepturen A bis H, gemäß den erfindungsgemäßen Boronsäuren, bis zu einem Faktor 10 längere Haltbarkeiten aufweisen. Somit können neben der leichteren und sicheren Anwendung ebenso Kosten reduziert werden. Eine längere Haltbarkeit bedeutet zudem auch weniger Ausschussware und somit weniger Abfälle. Dies soll den Verbrauch an teuren Rohstoffen wie der Carbonfaser reduzieren und dadurch auch die Umwelt schonen.

**Tabelle 2a: Latenz der Epoxidharz-Zusammensetzungen im Vergleich**

| **Rezepturen** | **Ref.2** | **H** | **I** | **J** |
|---|---|---|---|---|
| EPIKOTE^{™} Resin 828 | 100 | 100 | 100 | 100 |
| DYHARD^{®} 100S | 6,5 | 6,5 | 6,5 | 6,5 |
| Harnstoff 1 | 5,0 | 5,0 | 5,0 | 5,0 |
| 1-Octylboronsäure | | 0,1 | 0,4 | 1 |

| **Dynamischer DSC** | | | | |
|---|---|---|---|---|
| End-Tg [°C] | 130 | 130 | 131 | 130 |

| **Isotherme DSC; 1 Std. bei 140 °C** | | | | |
|---|---|---|---|---|
| Zeit bis 90 % Umsatz [min] | 7 | 6 | 8 | 10 |
| Latenz @ 40 °C [Tage] | 2 | 6 | 10 | 17 |

### Beschreibung und Wertung der Ergebnisse aus Tabelle 2a

Anhand der erfindungsgemäße Rezepturen H, I, und J in Tabelle 2a wird in Vergleich zu Ref. 2 gezeigt, dass durch das Variieren der Menge der erfindungsgemäße Boronsäure die Lagerstabilität der 1-komponentige Epoxidharz Formulierung eingestellt werden kann. So zeigen die Werte aus der DSC Analyse, dass die Härtungszeit (90 % Umsatz bei 140 °C) und die End-Eigenschaften (End-Tg) der gehärteten Formulierung keine wesentliche Beeinträchtigung aufzeigen. Die Latenz ist für die Rezepturen H, I, und J gegenüber Ref. 2 immer noch um mindestens Faktor 3 höher. Somit lässt sich je nach gewünschtem Eigenschaftsprofil, allen voran der Latenz und somit Lagerstabilität, eine passgenaue Epoxidharzformulierung produzieren. Die Vorteile wie Lagerstabilität, Reduktion von Ausschussware durch Überlagerung, umweltschonendes Handeln und sichere, leichtere Anwendung bleiben weiterhin erhalten.

**Tabelle 2b: Latenz der Epoxidharz-Zusammensetzungen im Vergleich**

| **Rezepturen** | **Ref.2** | **K** | **L** | **M** | **N** | **O** | **P** | **Q** | **R** |
|---|---|---|---|---|---|---|---|---|---|
| EPIKOTE^{™} Resin 828 | 100 | 100 | 100 | 100 | 100 | 100 | 100 | 100 | 100 |
| DYHARD^{®} 100S | 6,5 | 6,5 | 6,5 | 6,5 | 6,5 | 6,5 | 6,5 | 6,5 | 6,5 |
| Harnstoff 1 | 5,0 | 5,0 | 5,0 | 5,0 | 5,0 | 5,0 | 5,0 | 5,0 | 5,0 |
| 2-Carboxyphenylboronsäure | | 0,4 | | | | | | | |
| 3-Carboxyphenylboronsäure | | | 0,4 | | | | | | |
| 4-Carboxyphenylboronsäure | | | | 0,4 | | | | | |
| (2-Hydroxymethyl)phenylboronsäure | | | | | 0,4 | | | | |
| 4-Cyanophenylboronsäure | | | | | | 0,4 | | | |
| 4-(Methansulfonyl)phenylboronsäure | | | | | | | 0,4 | | |
| 3,4,5-Trifluorphenylboronsäure | | | | | | | | 0,4 | |
| 2,4-Difluorphenylboronsäure | | | | | | | | | 0,4 |

| **Dynamischer DSC** | | | | | | | | | |
|---|---|---|---|---|---|---|---|---|---|
| End-Tg [°C] | 130 | 133 | 132 | 135 | 134 | 133 | 132 | 133 | 132 |

| **Isotherme DSC; 1 Std. bei 140 °C** | | | | | | | | | |
|---|---|---|---|---|---|---|---|---|---|
| Zeit bis 90 % Umsatz [min] | 7 | 8 | 11 | 10 | 11 | 9 | 8 | 9 | 8 |
| Latenz bei 40 °C [Tage] | 2 | 6 | 18 | 14 | 16 | 22 | 21 | 15 | 24 |

### Beschreibung und Wertung der Ergebnisse aus Tabelle 2b

In Tabelle 2b wird gezeigt, dass auch bei erhöhtem Anteil an Uron-Beschleuniger, die erfindungsgemäßen Boronsäuren aus den Rezepturen K bis R ebenso ihre Vorteile ausspielen im Vergleich zu Ref. 2. Bei schneller härtenden Systemen können schneller Aushärtungszeiten realisiert werden, wie es aus der isothermen DSC-Analyse zur Ermittlung des Umsatzes bei 90 % bei 140 °C ersichtlich ist. Hierbei bleibt die Aushärtungszeit in einem annähernd gleichen Bereich, während die Latenz wieder um mindestens Faktor 3 bis über einem Faktor 10 ansteigt. Die Endeigenschaften passen sich der Rezeptur an und bleiben gegenüber der Ref. 2 immer im gleichen gewünschten Bereich.

Somit wird gezeigt, dass die Latenzerhöhung auch bei Variation der Beschleunigermenge seine Wirkung beibehält und weiterhin Vorteile wie Lagerstabilität, Reduktion von Ausschussware durch Überlagerung, umweltschonendes Handeln und sichere, leichtere Anwendung fördern.

**Tabelle 3: Latenz der Epoxidharz-Zusammensetzungen im Vergleich**

| **Rezepturen** | **Ref. 1** | **A** | **Ref.3** | **S** | **Ref. 4** | **T** | **Ref. 5** | **u** |
|---|---|---|---|---|---|---|---|---|
| EPIKOTE^{™} Resin 828 | 100 | 100 | 100 | 100 | 100 | 100 | 100 | 100 |
| DYHARD^{®} 100S | 6,5 | 6,5 | 6,5 | 6,5 | 6,5 | 6,5 | 6,5 | 6,5 |
| Harnstoff 1 | 3,0 | 3,0 | | | | | | |
| Harnstoff 2 | | | 3,0 | 3,0 | | | | |
| Harnstoff 3 | | | | | 3,0 | 3,0 | | |
| Harnstoff 4 | | | | | | | 3,0 | 3,0 |
| Methylboronsäure | | 0,4 | | 0,4 | | 0,4 | | 0,4 |

| **Dynamischer DSC** | | | | | | | | |
|---|---|---|---|---|---|---|---|---|
| End-Tg [°C] | 135 | 138 | 132 | 131 | 136 | 135 | 121 | 121 |

| **Isotherme DSC; 1 Std. bei 140 °C** | | | | | | | | |
|---|---|---|---|---|---|---|---|---|
| Zeit bis 90 % Umsatz [min] | 11 | 13 | 17 | 19 | 23 | 28 | 27 | 29 |
| Latenz bei 40 °C [Tage] | 3 | 10 | 3 | 16 | -- | -- | -- | -- |
| Latenz bei 60 °C [Tage] | -- | -- | -- | -- | 3 | 11 | 2 | 9 |

### Beschreibung und Wertung der Ergebnisse aus Tabelle 3

Weitergehend wird in Tabelle 3 gezeigt, dass die Wirkung der erfindungsgemäßen Boronsäuren unabhängig von den verwendeten Uron-Beschleunigern ist. Im direkten Vergleich von Ref. 1 mit Rezeptur A, und Ref. 3 mit Rezeptur S, Ref. 4 mit Rezeptur T und Ref. 5 mit Rezeptur U wird gezeigt, dass die Lagerstabilität bei 40 °C und 60 °C deutlich verlängert wird, wiederum um mehr als Faktor 3 mit der jeweiligen Boronsäure. Reaktivität (Zeit bis 90 % Umsatz bei 140 °C) und End-Tg sind davon unwesentlich beeinträchtigt. Somit können Formulierungen mit unterschiedlichen Beschleunigertypen, mono- wie multifunktionelle, aliphatische, cycloaliphatische wie auch aromatische Beschleunigertypen auf Uronbasis in Verbindung mit den erfindungsgemäßen Boronsäuren nutzen. Hierbei profitieren Anwender ebenso von den schon beschriebenen Vorteilen wie Lagerstabilität, Reduktion von Ausschussware durch Überlagerung, umweltschonendes Handeln und sichere, leichtere Anwendung.

**Tabelle 4: Latenz der Epoxidharz-Zusammensetzungen im Vergleich**

| **Rezepturen** | **Ref. 6** | **V** | **Ref. 7** | **W** |
|---|---|---|---|---|
| Araldite^{®} MY 721 | 100 | 100 | | |
| Epilox^{®} F17-00 | | | 100 | 100 |
| DYHARD^{®} 100S | 9,5 | 9,5 | 7,1 | 7,1 |
| Harnstoff 1 | 5,0 | 5,0 | 5,0 | 5,0 |
| Methylboronsäure | | 0,4 | | 0,4 |

| **Dynamischer DSC** | | | | |
|---|---|---|---|---|
| End-Tg [°C] | 181 | 178 | 115 | 116 |

| **Isotherme DSC; 1 Std. bei 140 °C** | | | | |
|---|---|---|---|---|
| Zeit bis 90 % Umsatz [min] | 5 | 6 | 6 | 7 |
| Latenz bei 40 °C [Tage] | 4 | 13 | 2 | 9 |

### Beschreibung und Wertung der Ergebnisse aus Tabelle 4

Weitergehend wird in Tabelle 4 gezeigt, dass die Wirkung der erfindungsgemäßen Boronsäuren unabhängig von den verwendeten Harzen ist. Im direkten Vergleich von Ref. 6 mit Rezeptur V, sowie Ref. 7 zu Rezeptur W wird gezeigt, dass die Lagerstabilität bei 40 °C deutlich verlängert wird, wiederum um mehr als Faktor 3 mit der jeweiligen Boronsäure. Reaktivität (Zeit bis 90 % Umsatz bei 140 °C) und End-Tg sind davon unwesentlich beeinträchtigt. Somit können Formulierungen mit unterschiedlichen Harztypen, bi- wie auch multifunktionelle Harze auf Epoxidbasis in Verbindung mit den erfindungsgemäßen Boronsäuren nutzen. Weiterhin profitieren Anwender ebenso von den schon beschriebenen Vorteilen wie Lagerstabilität, Reduktion von Ausschussware durch Überlagerung, umweltschonendes Handeln und sichere, leichtere Anwendung.

**Tabelle 5: Latenz der Epoxidharz-Zusammensetzungen im Vergleich**

| **Rezepturen** | **Ref.2** | **K** | **I** | **X** | **Y** | **Z** |
|---|---|---|---|---|---|---|
| EPIKOTE^{™} Resin 828 | 100 | 100 | 100 | 100 | 100 | 100 |
| DYHARD^{®} 100S | 6,5 | 6,5 | 6,5 | | | |
| Harnstoff 1 | 5,0 | 5,0 | 5,0 | | | |
| VESTAMIN^{®} IPD | | | | 23 | 23 | 23 |
| 2-Carboxyphenylboronsäure | | 0,4 | | | 0,4 | |
| 1-Octylboronsäure | | | 0,4 | | | 0,4 |

| **Dynamischer DSC** | | | | | | |
|---|---|---|---|---|---|---|
| End-Tg [°C] | 130 | 133 | 131 | 158 | 153 | 163 |

| **Isotherme DSC; 1 Std. bei 140 °C** | | | | | | 15 |
|---|---|---|---|---|---|---|
| Zeit bis 90 % Umsatz [min] | 7 | 8 | 8 | 9 | 9 | 8 |
| Latenz bei 23 °C [Tage] | -- | -- | -- | 0,05 | 0,04 | 0,05 |
| Latenz bei 40 °C [Tage] | 2 | 6 | 10 | -- | -- | -- |

### Beschreibung und Wertung der Ergebnisse aus Tabelle 5

In Tabelle 5 werden Formulierungen mit Amin-basierten Härtern den erfindungsgemäßen Formulierungen K und I gegenübergestellt. Aus der Tabelle geht hervor, dass aminische Härter wie VESTAMIN^{®} IPD, chemisch Isophorondiamin, in Kombination mit Boronsäuren keine Latenzerhöhung erzielen. Die entsprechenden Formulierungen X, Y und Z zeigen jeweils keinen Anstieg der Latenz bei 23°C. Nur die zu Vergleich hinzugezogenen Rezepturen Ref.2, K und I zeigen den schon diskutierten Effekt der Latenzerhöhung durch Verwendung von Boronsäuren mit Harnstoffen auf. Somit wird festgestellt, dass die erfindungsgemäßen Boronsäuren keinen latenten Effekt auf die Aminfunktion haben. Es werden keine Latenzerhöhungen detektiert, die Latenzen der Formulierungen bleiben identisch.

**Tabelle 6: Latenz der Epoxidharz-Zusammensetzungen im Vergleich**

| **Rezepturen** | **Ref.2** | **K** | **I** | **AD** | **AE** | **AF** | **AG** | **AH** | **AI** |
|---|---|---|---|---|---|---|---|---|---|
| EPIKOTE^{™} Resin 828 | 100 | 100 | 100 | 100 | 100 | 100 | 100 | 100 | 100 |
| DYHARD^{®} 100S | 6,5 | 6,5 | 6,5 | 6,5 | 6,5 | 6,5 | 6,5 | 6,5 | 6,5 |
| Harnstoff 1 | 5,0 | 5,0 | 5,0 | | | | | | |
| 1-Methylimidazol | | | | 3,0 | 3,0 | 3,0 | | | |
| 2-Ethyl-4-Methylimidazol | | | | | | | 3,0 | 3,0 | 3,0 |
| 2-Carboxyphenylboronsäure | | 0,4 | | | 0,4 | | | 0,4 | |
| 1-Octylboronsäure | | | 0,4 | | | 0,4 | | | 0,4 |

| **Dynamischer DSC** | | | | | | | | | |
|---|---|---|---|---|---|---|---|---|---|
| End-Tg [°C] | 130 | 133 | 131 | 134 | 135 | 131 | 135 | 140 | 137 |

| **Isotherme DSC; 1 Std. bei 140 °C** | | | | | | | | | |
|---|---|---|---|---|---|---|---|---|---|
| Zeit bis 90 % Umsatz [min] | 7 | 8 | 8 | 2 | 2 | 2 | 2 | 3 | 2 |
| Latenz bei 23 °C [Tage] | -- | -- | -- | 0,4 | 0,4 | 0,4 | -- | -- | -- |
| Latenz bei 40 °C [Tage] | 2 | 6 | 10 | -- | -- | -- | 0,13 | 0,14 | 0,14 |

### Beschreibung und Wertung der Ergebnisse aus Tabelle 6

Tabelle 6 zeigt die Gegenüberstellung von Harnstoff beschleunigten zu Imidazolbeschleunigten Formulierungen, insbesondere der Effekt der Boronsäuren auf die jeweilige Formulierung. Hierbei werden die Beschleuniger 1-Methylimidazol, Formulierungen AD-AF, und 2-Ethyl-4-methylimidaol, Formulierungen AG-AI, den Harnstoff-basierten gegenübergestellt. Bei allen Imidazol-basierten Formulierungen werden durch Zugabe der erfindungsgemäßen Boronsäuren keine Latenzerhöhungen detektiert. Die Latenzen der Formulierungen AD-AF und AG-AI sind in einem identischen Zeitbereich, sodass nicht die gleichen Latenz-Effekte wie in Formulierungen K und I auftreten.

Nur die zu Vergleich hinzugezogenen Rezepturen Ref.2, K und I zeigen den schon diskutierten Effekt der Latenzerhöhung durch Verwendung von Boronsäuren mit Harnstoffen auf. Somit wird festgestellt, dass die erfindungsgemäßen Boronsäuren keinen Effekt auf Imidazole haben. Es werden keine Latenzerhöhungen detektiert, die Latenzen der Formulierungen bleiben wiederum identisch.

**Tabelle 7: Latenz der Epoxidharz-Zusammensetzungen im Vergleich**

| **Rezepturen** | **Ref.2** | **I** | **AE** | **AF** |
|---|---|---|---|---|
| EPIKOTE^{™} Resin 828 | 100 | 100 | | |
| DYHARD^{®} 100S | 6,5 | 6,5 | | |
| Araldite^{®} LY 1556 SP | | | 100 | 100 |
| Aradur^{®} 917 | | | 90 | 90 |
| Harnstoff 1 | 5,0 | 5,0 | | |
| 1-Methylmidazol | | | 3,0 | 3,0 |
| Octylboronsäure | | 0,4 | | 0,4 |
| Latenz bei 23 °C [Tage] | - | - | 0,7 | 0,7 |
| Latenz bei 40 °C [Tage] | 2 | 10 | - | - |

### Beschreibung und Wertung der Ergebnisse aus Tabelle 7

In Tabelle 7 wird der Versuch dargestellt, die Latenz einer Anhydrid-Härter basierten Formulierung zu erhöhen. Hierbei wird als Beschleuniger 1-Methylimidazol ausgewählt. Wie aus Tabelle 7 ersichtlich ist, zeigt die mit Boronsäure versetzte Formulierung AF keine Erhöhung der Latenz gegenüber AE. Die Boronsäure erzielt keine Wirkung in einer Anhydrid-basierten Formulierung. Die erfindungsgemäße Boronsäure erhöht die Latenz lediglich in der Harnstoff-beschleunigten Formulierung I, die Latenz erhöht sich um den Faktor 5.

Somit wird mit den erfindungsgemäßen Boronsäuren eine Latenzerhöhung bei Harnstoff-basierten Formulierungen erzielt und dadurch wesentliche Vorteile wie eine erhöhte Lagerstabilität entsprechender Formulierungen geschaffen.

## Patentansprüche

1. Verwendung von Boronsäuren der allgemeinen Formel (I) zur Erhöhung der Lagerstabilität von Epoxidharz-Zusammensetzungen umfassend ein Epoxidharz, einen Härter zur Härtung des Epoxidharzes und einen Härtungsbeschleuniger zur beschleunigten Härtung des Epoxidharzes, wobei für Formel (I) gilt: 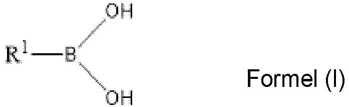 wobei für den Rest R¹ gilt:
R¹ = Alkyl, Hydroxyalkyl oder ein Rest der Formel (II), wobei für Formel (II) gilt: 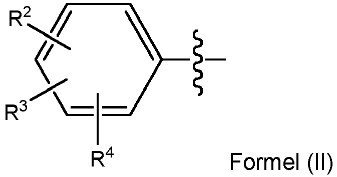 wobei für R², R³, R⁴ unabhängig voneinander gilt und mindestens einen Rest R², R³, R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl oder B(OH)₂,
wobei die Epoxidharz-Zusammensetzung als Härtungsbeschleuniger einen Härtungsbeschleuniger gemäß Formel (IV) umfasst, wobei für Formel (IV) gilt: 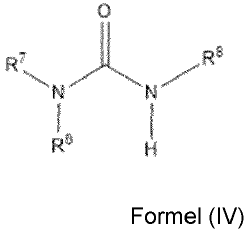 wobei für R⁶, R⁷, R⁸ unabhängig voneinander gilt:
R⁶, R⁷ = unabhängig voneinander Wasserstoff oder C₁- bis C₅-Alkyl,
R⁸ = Wasserstoff, C₁- bis C₁₅-Alkyl, C₃- bis C₁₅-Cycloalkyl, Aryl, Alkylaryl,
mit -NHC(O)NR⁶R⁷substituiertes C₁- bis C₁₅-Alkyl,
mit -NHC(O)NR⁶R⁷substituiertes C₃- bis C₁₅-Cycloalkyl,
mit -NHC(O)NR⁶R⁷ substituiertes Aryl oder
mit -NHC(O)NR⁶R⁷ substituiertes Alkylaryl.

2. Verwendung nach Anspruch 1, **dadurch gekennzeichnet, dass** der Rest R¹ in Formel (I) bedeutet:
R¹ = Methyl, Ethyl, n-Propyl, 1-Methylethyl, n-Butyl, 1-Methylpropyl, 2-Methylpropyl, n-Pentyl, n-Hexyl, n-Heptyl, n-Octyl, n-Nonyl, n-Decanyl, Hydroxymethyl, 2-Hydroxyethyl, 3-Hydroxypropyl, 4-Hydroxybutyl oder 5-Hydroxypentyl.

3. Verwendung nach Anspruch 1, **dadurch gekennzeichnet, dass** R¹ in Formel (I) einen Rest der Formel (II) bedeutet, wobei für die Reste R², R³, R⁴ gilt:
R² = Fluor, Chlor, Brom, lod, Cyano, C₁- bis C₅-Alkyl, Alkoxy, Acyl, Alkylsulfonyl, Aryl, Carboxyl oder B(OH)₂,
R³, R⁴ = Wasserstoff.

4. Verwendung nach Anspruch 1, **dadurch gekennzeichnet, dass** R¹ in Formel (I) einen Rest der Formel (II) bedeutet, wobei für die Reste R², R³, R⁴ unabhängig voneinander gilt:
R², R³ = unabhängig voneinander Fluor, Chlor, Brom, lod, Cyano, C₁- bis C₅-Alkyl, Alkoxy, Acyl, Alkylsulfonyl, Aryl, Carboxyl oder B(OH)₂,
R⁴ = Wasserstoff.

5. Verwendung nach Anspruch 1, **dadurch gekennzeichnet, dass** R¹ in Formel (I) einen Rest der Formel (II) bedeutet, wobei für die Reste R², R³, R⁴ unabhängig voneinander gilt:
R², R³, R⁴ = Fluor, Chlor, Brom, lod, Cyano, C₁- bis C₅-Alkyl, Alkoxy, Acyl, Alkylsulfonyl, Aryl, Carboxyl oder B(OH)₂.

6. Verwendung nach einem der Ansprüche 1 bis 5, **dadurch gekennzeichnet, dass** die Epoxidharz-Zusammensetzung als Härter Cyanamid oder einen Härter gemäß allgemeiner Formel (III) umfasst, wobei für Formel (III) gilt 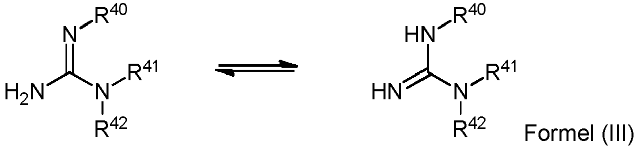 wobei für die Reste R⁴⁰, R⁴¹, R⁴² unabhängig voneinander gilt:
R⁴⁰ = Cyano, Nitro, Acyl oder ein Rest der Formel -(C=X)-R⁴³, mit
X = Imino oder Sauerstoff,
R⁴³ = Amino, Alkylamino oder Alkoxy,
R⁴¹ = Wasserstoff, C₁- bis C₅-Alkyl, Aryl oder Acyl,
R⁴² = Wasserstoff oder C₁- bis C₅-Alkyl.

7. Epoxidharz-Zusammensetzung umfassend mindestens ein Epoxidharz sowie einen Härter zur Härtung des Epoxidharzes und einen Härtungsbeschleuniger zur beschleunigten Härtung des Epoxidharzes, **dadurch gekennzeichnet, dass** die Zusammensetzung mindestens eine Boronsäure der allgemeinen Formel (I) umfasst, wobei für Formel (I) gilt: 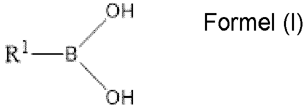 wobei für den Rest R¹ gilt:
R¹ = Alkyl, Hydroxyalkyl oder ein Rest der Formel (II), wobei für Formel (II) gilt: 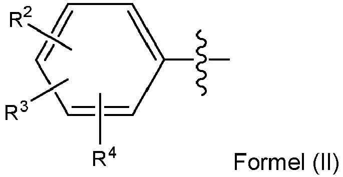 wobei für R², R³, R⁴ unabhängig voneinander gilt und mindestens einen Rest R², R³, R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl oder B(OH)₂,
wobei die Epoxidharz-Zusammensetzung als Härtungsbeschleuniger einen Härtungsbeschleuniger gemäß Formel (IV) umfasst, wobei für Formel (IV) gilt: 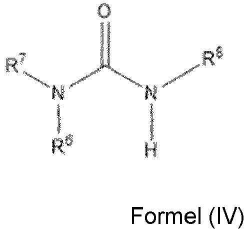 wobei für R⁶, R⁷, R⁸ unabhängig voneinander gilt:
R⁶, R⁷ = unabhängig voneinander Wasserstoff oder C₁- bis C₅-Alkyl,
R⁸ = Wasserstoff, C₁- bis C₁₅-Alkyl, C₃- bis C₁₅-Cycloalkyl, Aryl, Alkylaryl,
mit -NHC(O)NR⁶R⁷substituiertes C₁- bis C₁₅-Alkyl,
mit -NHC(O)NR⁶R⁷substituiertes C₃- bis C₁₅-Cycloalkyl,
mit -NHC(O)NR⁶R⁷ substituiertes Aryl oder
mit -NHC(O)NR⁶R⁷ substituiertes Alkylaryl.

8. Epoxidharz-Zusammensetzung nach Anspruch 7, **dadurch gekennzeichnet, dass** die Epoxidharz-Zusammensetzung als Härter Cyanamid oder einen Härter gemäß allgemeiner Formel (III) umfasst, wobei für Formel (III) gilt 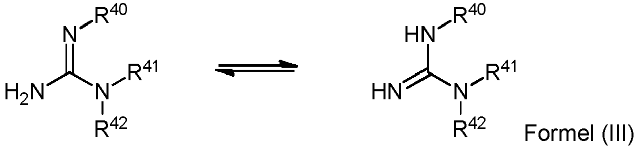 wobei für die Reste R⁴⁰, R⁴¹, R⁴² unabhängig voneinander gilt:
R⁴⁰ = Cyano, Nitro, Acyl oder ein Rest der Formel -(C=X)-R⁴³, mit
X = Imino oder Sauerstoff,
R⁴³ = Amino, Alkylamino oder Alkoxy,
R⁴¹ = Wasserstoff, C₁- bis C₅-Alkyl, Aryl oder Acyl,
R⁴² = Wasserstoff oder C₁- bis C₅-Alkyl.

9. Epoxidharz-Zusammensetzung nach einem der Ansprüche 7 oder 8, **dadurch gekennzeichnet, dass** die Epoxidharz-Zusammensetzung bezogen auf 100 Gewichtsteile Epoxidharz
a) 1 bis 15 Gewichtsteile Härter,
b) 0,1 bis 9 Gewichtsteile Härtungsbeschleuniger, und
c) 0,05 bis 3,0 Gewichtsteile Boronsäure gemäß Formel (I),
umfasst.

10. Epoxidharz-Zusammensetzung nach einem der Ansprüche 7 bis 9, **dadurch gekennzeichnet, dass** das Gewichtsverhältnis Härter zu Boronsäure einem Verhältnis im Bereich 1 : 1 bis 240 : 1 entspricht, und/ oder das Gewichtsverhältnis Härtungsbeschleuniger zu Boronsäure einem Verhältnis im Bereich 0,05 : 1 bis 160 : 1 entspricht.

## Claims

1. Use of boronic acids of the general formula (I) for increasing the storage stability of epoxy resin compositions comprising an epoxy resin, a curing agent for curing the epoxy resin and a curing accelerator for accelerating the curing of the epoxy resin, wherein formula (I) represents: 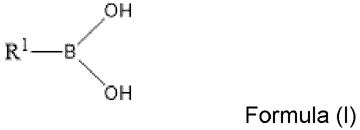 wherein residue R¹ means:
R¹ = alkyl, hydroxyalkyl or a residue of formula (II), wherein formula (II) is: 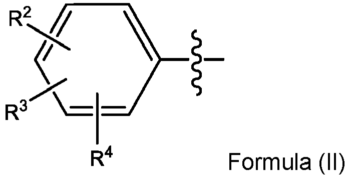 wherein R², R³, R⁴ independently of one another mean and at least one residue R², R³, R⁴ is not hydrogen:
R², R³, R⁴= hydrogen, fluorine, chlorine, bromine, iodine, cyano, C₁ to C₅ alkyl, alkoxy, acyl, alkylsulfonyl, aryl, carboxyl or B(OH)₂,
wherein the epoxy resin composition comprises, as a curing accelerator, a curing accelerator according to formula (IV), wherein formula (IV) is: 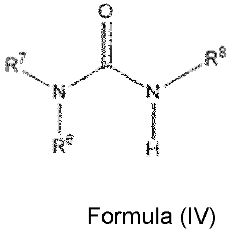 wherein R⁶, R⁷, R⁸ independently of one another mean:
R⁶, R⁷ = independently of one another hydrogen or C₁ to C₅ alkyl,
R⁸ = hydrogen, C₁ to C₁₅ alkyl, C₃ to C₁₅ cycloalkyl, aryl, alkylaryl,
C₁ to C₁₅ alkyl substituted with -NHC(O)NR⁶R⁷,
Cato C₁₅ cycloalkyl substituted with -NHC(O)NR⁶R⁷,
aryl substituted with -NHC(O)NR⁶R⁷ or
alkylaryl substituted with -NHC(O)NR⁶R⁷.

2. Use according to claim 1, **characterized in that** residue R¹ in formula (I) means:
R¹ = methyl, ethyl, n-propyl, 1-methylethyl, n-butyl, 1-methylpropyl, 2-methylpropyl, n-pentyl, n-hexyl, n-heptyl, n-octyl, n-nonyl, n-decanyl, hydroxymethyl, 2-hydroxyethyl, 3-hydroxypropyl, 4-hydroxybutyl or 5-hydroxypentyl.

3. Use according to claim 1, **characterized in that** R¹ in formula (I) is a residue of formula (II), wherein residues R², R³, R⁴ mean:
R² = fluorine, chlorine, bromine, iodine, cyano, C₁ to C₅ alkyl, alkoxy, acyl, alkylsulfonyl, aryl, carboxyl or B(OH)₂,
R³, R⁴ = hydrogen.

4. Use according to claim 1, **characterized in that** R¹ in formula (I) is a residue of formula (II), wherein residues R², R³, R⁴ independently of one another mean:
R², R³ = independently of one another fluorine, chlorine, bromine, iodine, cyano, C₁ to C₅ alkyl, alkoxy, acyl, alkylsulfonyl, aryl, carboxyl or B(OH)₂,
R⁴ = hydrogen.

5. Use according to claim 1, **characterized in that** R¹ in formula (I) is a residue of formula (II), wherein residues R², R³, R⁴ independently of one another mean:
R², R³, R⁴ = fluorine, chlorine, bromine, iodine, cyano, C₁ to C₅ alkyl, alkoxy, acyl, alkylsulfonyl, aryl, carboxyl or B(OH)₂.

6. Use according to any one of claims 1 to 5, **characterized in that** the epoxy resin composition comprises, as curing agent, cyanamide or a curing agent according to general formula (III), wherein formula (III) is 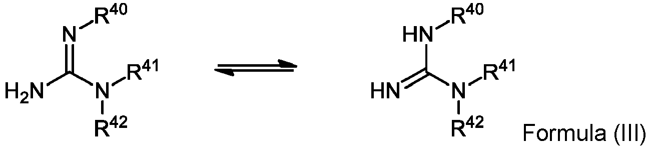 wherein residues R⁴⁰, R⁴¹, R⁴² independently of one another mean:
R⁴⁰ = cyano, nitro, acyl or a residue of the formula -(C=X)-R⁴³, with
X = imino or oxygen,
R⁴³ = amino, alkylamino or alkoxy,
R⁴¹ = hydrogen, C₁ to C₅ alkyl, aryl or acyl,
R⁴² = hydrogen or C₁ to C₅ alkyl.

7. An epoxy resin composition comprising at least one epoxy resin and a curing agent for curing the epoxy resin and a curing accelerator for accelerating curing of the epoxy resin, **characterized in that** the composition comprises at least one boronic acid of the general formula (I), wherein formula (I) represents: 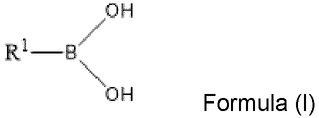 wherein residue R¹ means:
R¹ = alkyl, hydroxyalkyl or a residue of formula (II), wherein formula (II) is: 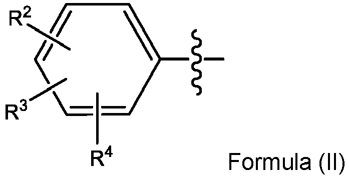 wherein R², R³, R⁴ independently of one another mean and at least one residue R², R³, R⁴ is not hydrogen:
R², R³, R⁴ = hydrogen, fluorine, chlorine, bromine, iodine, cyano, C₁ to C₅ alkyl, alkoxy, acyl, alkylsulfonyl, aryl, carboxyl or B(OH)₂,
wherein the epoxy resin composition comprises, as a curing accelerator, a curing accelerator according to formula (IV), wherein formula (IV) is: 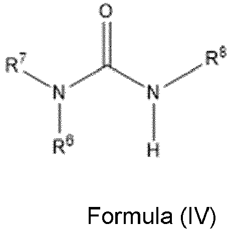 wherein R⁶, R⁷, R⁸ independently of one another mean:
R⁶, R⁷ = independently of one another hydrogen or C₁ to C5 alkyl,
R⁸ = hydrogen, C₁ to C₁₅ alkyl, C₃ to C₁₅ cycloalkyl, aryl, alkylaryl,
C₁ to C₁₅ alkyl substituted with -NHC(O)NR⁶R⁷,
Cato C₁₅ cycloalkyl substituted with -NHC(O)NR⁶R⁷,
aryl substituted with -NHC(O)NR⁶R⁷ or
alkylaryl substituted with -NHC(O)NR⁶R⁷.

8. Epoxy resin composition according to claim 7, **characterized in that** the epoxy resin composition comprises, as a curing agent, cyanamide or a curing agent according to general formula (III), wherein formula (III) is 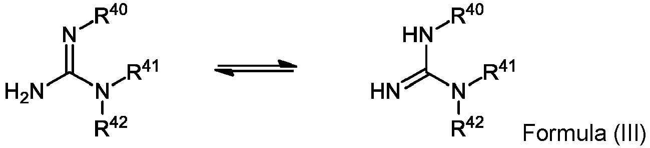 wherein residues R⁴⁰, R⁴¹, R⁴² independently of one another mean:
R⁴⁰ = cyano, nitro, acyl or a residue of the formula -(C=X)-R⁴³, with
X = imino or oxygen,
R⁴¹ = amino, alkylamino or alkoxy,
R⁴¹ = hydrogen, C₁ to C₅ alkyl, aryl or acyl,
R⁴² = hydrogen or C₁ to C₅ alkyl.

9. Epoxy resin composition according to any one of claims 7 or 8, **characterized in that** the epoxy resin composition based on 100 parts by weight of epoxy resin comprises
a) 1 to 15 parts by weight of curing agent,
b) 0.1 to 9 parts by weight of curing accelerator, and
c) 0.05 to 3.0 parts by weight of boronic acid according to formula (I).

10. Epoxy resin composition according to any one of claims 7 to 9, **characterized in that** the weight ratio of curing agent to boronic acid corresponds to a ratio in the range of 1 : 1 to 240 : 1, and/or the weight ratio of curing accelerator to boronic acid corresponds to a ratio in the range of 0.05 : 1 to 160 : 1.

## Revendications

1. Utilisation d'acides boroniques de formule générale (I) pour augmenter la stabilité au stockage de compositions de résine époxy comprenant une résine époxy, un agent de durcissement pour durcir la résine époxy et un accélérateur de durcissement pour accélérer le durcissement de la résine époxy, la formule (I) étant 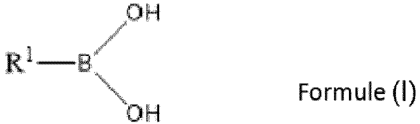 où, pour le radical R¹, on a :
R¹ = alkyle, hydroxyalkyle ou un radical de formule (II), la formule (II) étant : 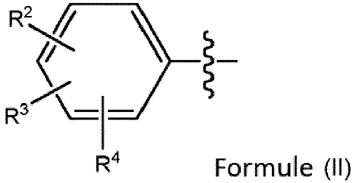 où pour R², R³, R⁴, indépendamment les uns des autres, et au moins un radical R², R³, R⁴ est différent de l'hydrogène :
R², R³, R⁴= hydrogène, fluor, chlore, brome, iode, cyano, C₁ à Cs-alkyl, alcoxy, acyle, alkylsulfonyle, aryle, carboxyle ou B(OH)₂,
la composition de résine époxy comprenant, en tant qu'accélérateur de durcissement, un accélérateur de durcissement selon la formule (IV), la formule (IV) étant : 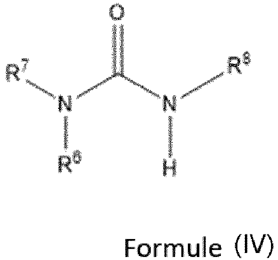 où pour R⁶, R⁷, R⁸, indépendamment les uns des autres :
R⁶, R⁷= indépendamment l'un de l'autre, hydrogène ou C₁ à Cs-alkyle,
R⁸ = hydrogène, C₁ à C₁₅-alkyle, C₃ à C₁₅-cycloalkyle, aryle, alkylaryle, C₁ à C₁₅-alkyle substitué par -NHC(O)NR⁶R⁷,
C₃ à C₁₅-cycloalkyle substitué par - NHC(O)NR⁶R⁷,
aryle substitué par - NHC(O)NR⁶R⁷ou
alkylaryle substitué par - NHC(O)NR⁶R⁷.

2. Utilisation selon la revendication 1, **caractérisée en ce que** le radical R¹ dans la formule (I) représente :
R¹ = méthyle, éthyle, n-propyle, 1-méthyléthyle, n-butyle, 1-méthylpropyle, 2- méthylpropyle, n-pentyle, n-hexyle, n-heptyle, n-octyle, n-nonyle, n-décanyle, hydroxyméthyle, 2-hydroxyéthyle, 3-hydroxypropyle, 4-hydroxybutyle ou 5-hydroxypentyle.

3. Utilisation selon la revendication 1, **caractérisée en ce que** R¹ dans la formule (I) représente un radical de formule (II), où pour les radicaux R², R³, R⁴ on a :
R² = fluor, chlore, brome, iode, cyano, C₁ à Cs-alkyle, alcoxy, acyle, alkylsulfonyle, aryle, carboxyle ou B(OH)₂,
R³, R⁴ = hydrogène.

4. Utilisation selon la revendication 1, **caractérisée en ce que** R¹ dans la formule (I) représente un radical de formule (II), où pour les radicaux R², R³, R⁴, indépendamment les uns des autres :
R², R³ = indépendamment l'un de l'autre, fluor, chlore, brome, iode, cyano, C₁ à Cs-alkyle, alcoxy, acyle, alkylsulfonyle, aryle, carboxyle ou B(OH)₂,
R⁴= hydrogène.

5. Utilisation selon la revendication 1, **caractérisée en ce que** R¹ dans la formule (I) représente un radical de formule (II), où pour les radicaux R², R³, R⁴ indépendamment les uns des autres :
R², R³, R⁴ = fluor, chlore, brome, iode, cyano, C₁ à Cs-alkyle, alcoxy, acyle, alkylsulfonyle, aryle, carboxyle ou B(OH)₂.

6. Utilisation selon l'une quelconque des revendications 1 à 5, **caractérisée en ce que** la composition de résine époxy comprend, en tant qu'agent de durcissement, du cyanamide ou un agent de durcissement selon la formule générale (III), la formule (III) étant 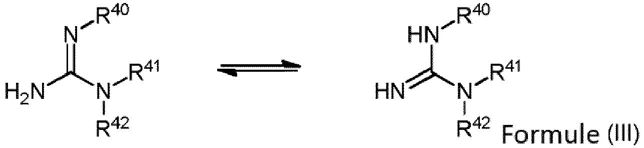 où, pour les radicaux R⁴⁰, R⁴¹, R⁴², indépendamment les uns des autres :
R⁴⁰ = cyano, nitro, acyle ou un radical de formule -(C=X)- R⁴³, avec
X = imino ou oxygène,
R⁴³ = amino, alkylamino ou alcoxy,
R⁴¹ = hydrogène, C₁ à C₅-alkyle, aryle ou acyle,
R⁴²= hydrogène ou C₁ à Cs-alkyle.

7. Composition de résine époxy comprenant au moins une résine époxy ainsi qu'un agent de durcissement pour le durcissement de la résine époxy et un accélérateur de durcissement pour le durcissement accéléré de la résine époxy, **caractérisée en ce que** la composition comprend au moins un acide boronique de formule générale (I), la formule (I) étant : 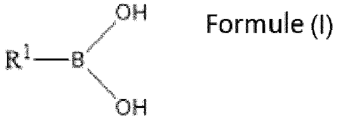 où, pour le radical R₁, on a :
R₁= alkyle, hydroxyalkyle ou un radical de formule (II), la formule (II) étant : 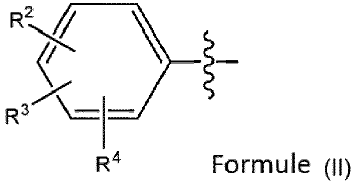 où pour R², R³, R⁴, indépendamment les uns des autres, et au moins un radical R², R³, R⁴ est différent de l'hydrogène :
R², R³, R⁴ = hydrogène, fluor, chlore, brome, iode, cyano, C₁ à Cs-alkyle, alcoxy, acyle, alkylsulfonyle, aryle, carboxyle ou B(OH)₂,
dans laquelle la composition de résine époxy comprend, en tant qu'accélérateur de durcissement, un accélérateur de durcissement selon la formule (IV), la formule (IV) étant :
où pour R⁶, R⁷, R⁸, indépendamment les uns des autres : 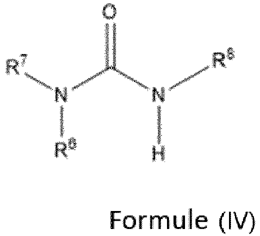 où pour R⁶, R⁷, R⁸ indépendamment les uns des autres :
R⁶, R⁷ = indépendamment l'un de l'autre, hydrogène ou C₁ à Cs-alkyle,
R⁸ = hydrogène, C₁ à C₁₅-alkyle, C₃ à C₁₅-cycloalkyle, aryle, alkylaryle,
C₁ à C₁₅-alkyle substitué par -NHC(O)NR⁶R⁷,
C₃ à C₁₅-cycloalkyle substitué par -NHC(O)NR⁶R⁷,
aryle substitué par - NHC(O)NR⁶R⁷ou
alkylaryle substitué par - NHC(O)NR⁶R⁷.

8. Composition de résine époxy selon la revendication 7, **caractérisée en ce que** la composition de résine époxy comprend, en tant qu'agent de durcissement, du cyanamide ou un agent de durcissement selon la formule générale (III), la formule 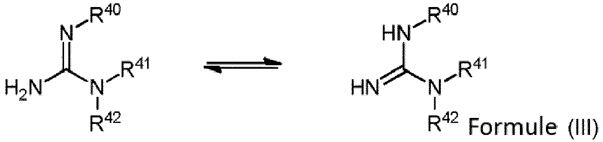 (III) étant
où, pour les radicaux R⁴⁰, R⁴¹, R⁴², indépendamment les uns des autres :
R⁴⁰ = cyano, nitro, acyle ou un radical de formule -(C=X)-R⁴³, avec
X = imino ou oxygène,
R⁴³ = amino, alkylamino ou alcoxy,
R⁴¹ = hydrogène, C₁ à C₅-alkyle, aryle ou acyle,
R⁴² = hydrogène ou C₁ à Cs-alkyle.

9. Composition de résine époxy selon l'une des revendications 7 ou 8, **caractérisée en ce que** la composition de résine époxy comprend, pour 100 parties en poids de résine époxy
a) 1 à 15 parties en poids d'agent de durcissement,
b) 0,1 à 9 parties en poids d'accélérateur de durcissement, et
c) 0,05 à 3,0 parties en poids d'acide boronique selon la formule (I).

10. Composition de résine époxy selon l'une quelconque des revendications 7 à 9, **caractérisée en ce que** le rapport en poids agent de durcissement/acide boronique correspond à un rapport compris dans la plage de 1 : 1 à 240 : 1, et/ou le rapport en poids accélérateur de durcissement/acide boronique correspond à un rapport compris dans la plage de 0,05 : 1 à 160 : 1.
